(19) Europäisches Patentamt
European Patent Office
Office européen des brevets

(11) **EP 4 668 638 A1**

(12) **EUROPEAN PATENT APPLICATION**
published in accordance with Art. 153(4) EPC

(43) Date of publication:
**24.12.2025 Bulletin 2025/52**

(21) Application number: **23922029.6**

(22) Date of filing: **17.02.2023**

(51) International Patent Classification (IPC):
**H04L 5/00** (2006.01)

(52) Cooperative Patent Classification (CPC):
**H04B 7/024; H04B 7/0456; H04L 5/00;
H04W 72/12; H04W 72/1268**

(86) International application number:
**PCT/CN2023/076965**

(87) International publication number:
**WO 2024/168898 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventor: **GAO, Xueyuan
Beijing 100085 (CN)**

(74) Representative: **Dehns Germany Partnerschaft
mbB
Theresienstraße 6-8
80333 München (DE)**

(54) **PHYSICAL UPLINK SHARED CHANNEL (PUSCH) COMMUNICATION METHOD AND APPARATUS, AND STORAGE MEDIUM**

(57) The present disclosure relates to a physical uplink shared channel (PUSCH) communication method and apparatus, and a storage medium. The method comprises : in response to determining that a terminal supports an uplink simultaneous transmission via multi-panel (STxMP) transmission, configuring a PUSCH transmission resource configuration parameter, wherein the PUSCH transmission resource configuration parameter corresponds to the terminal supporting symmetric panel transmission and/or asymmetric panel transmission; the PUSCH transmission resource configuration parameter comprises at least one of the following : a maximum number of transmission data layers, a codebook parameter, and a sounding reference signal (SRS) resource set configuration parameter; the SRS resource set configuration parameter is applied to codebook-based transmission and/or non-codebook-based transmission. According to the present disclosure, a higher uplink throughput rate and more reliable transmission performance are supported by means of uplink simultaneous transmission enhancement of multi-panel/multiple-transmission reception points.

In response to determining that a terminal supports uplink simultaneous transmission via multiple antenna panels STxMP transmission, configure a PUSCH transmission resource configuration parameter — S11

FIG. 4

EP 4 668 638 A1

**Description**

**TECHNICAL FIELD**

The present disclosure relates to communication technical field, and in particular to a Physical Uplink Shared Channel (PUSCH) communication method and apparatus, and a storage medium.

BACKGROUND

The uplink enhancement of Rel-18 of the 3rd Generation Partnership Project (3GPP) New Radio (NR) aims to support higher uplink throughput and more reliable transmission performance through multi-panel/multiple-Transmission Reception Point (M-TRP) uplink simultaneous transmission enhancement.

At present, in a case of Simultaneous transmission via multi-panel (STxMP), how to implement a resource indication scheme for different antenna panels to adapt to different terminal implementations and configuration requirements is a problem that needs to be solved.

**SUMMARY**

In order to overcome the problem existing in the related art, the present disclosure provides a Physical Uplink Shared Channel (PUSCH) communication method and apparatus and a storage medium.

According to a first aspect of an embodiment of the present disclosure, there is provided a Physical Uplink Shared Channel (PUSCH) communication method. The method is performed by a network device. The method includes: in response to determining that a terminal supports uplink simultaneous transmission via multiple antenna panels STxMP transmission, configuring a PUSCH transmission resource configuration parameter. The PUSCH transmission resource configuration parameter corresponds to the terminal supporting a symmetric panel transmission and/or an asymmetric panel transmission, and the PUSCH transmission resource configuration parameter includes at least one of: a maximum number of transmission data layers, a codebook parameter, and a Sounding Reference Signal (SRS) resource set configuration parameter applied to a codebook based transmission and/or a non-codebook based transmission.

In an implementation, the maximum number of transmission data layers includes a first maximum number of transmission data layers. The first maximum number of transmission data layers is a maximum number of transmission data layers supported by a corresponding panel for a communication performed by the terminal based on Multiple-Transmission Reception Point (M-TRP), and is a maximum number of transmission data layers supported by a corresponding panel for a communication performed by the terminal based on a Single-Transmission Reception Point (S-TRP).

In an implementation, SRS resource sets for different panels in symmetric panels and/or asymmetric panels supported by the terminal correspond to a same first maximum number of transmission data layers.

In an implementation, different SRS resource sets for different panels in asymmetric panels supported by the terminal correspond to different first maximum numbers of transmission data layers.

In an implementation, the maximum number of transmission data layers further includes a second maximum number of transmission data layers; the second maximum number of transmission data layers is a maximum number of transmission data layers supported by the corresponding panel for the communication performed by the terminal based on the S-TRP.

In an implementation, different SRS resource sets for different panels in the symmetric panels and/or asymmetric panels supported by the terminal correspond to different second maximum numbers of transmission data layers.

In an implementation, SRS resource sets for different panels in the asymmetric panels supported by the terminal correspond to different second maximum numbers of transmission data layers.

In an implementation, the codebook parameter includes at least one of: a codebook subset, and a full power mode; different panels in symmetrical panels supported by the terminal correspond to a same codebook subset and/or a same full power mode; different panels in asymmetric panels supported by the terminal correspond to a same codebook subset and/or a same full power mode; or, different panels in the asymmetric panels supported by the terminal correspond to different codebook subsets and/or different full power modes.

In an implementation, the SRS resource set configuration parameter includes at least one of: the number of SRS resources in an SRS resource set and the number of ports of each SRS resource in the SRS resource set.

In an implementation, in response to the terminal adopting the codebook transmission, different SRS resource sets for different panels in symmetric panels and/or asymmetric panels supported by the terminal have a same number of SRS resources, and SRS resources have a same number of ports; and/or in response to the terminal adopting the non-codebook transmission, different SRS resource sets for different panels in the symmetric panels and/or asymmetric panels supported by the terminal have a same number of SRS resources.

In an implementation, the terminal adopts the codebook transmission, and the number of ports of SRS resources for different SRS resource sets for different panels in the symmetric panels supported by the terminal is a first maximum number of transmission data layers.

In an implementation, the terminal adopts the codebook transmission, and the number of ports of SRS resources for different SRS resource sets for different panels in the symmetric panels supported by the terminal is a first maximum number of transmission data layers and/or a second maximum number of transmission layers.

In an implementation, the terminal adopts the codebook transmission, a full power mode of the terminal is configured as a full power mode 2, and the SRS resource sets for different panels in the symmetric panels supported by the terminal have a maximum number of SRS resources of 4; in response to the full power mode of the terminal not being configured as the full power mode 2, the SRS resource sets for different panels in the symmetric panels supported by the terminal have a maximum number of SRS resources of 2; or in response to the full power mode of the terminal not being configured as the full power mode 2, the maximum number of SRS resources for different SRS resource sets for different panels in the symmetric panels supported by the terminal is the first maximum number of transmission data layers or a second maximum number of transmission layers.

In an implementation, the terminal adopts the non-codebook transmission, and the number of SRS resources for different SRS resource sets for different panels in the symmetric panels supported by the terminal is a first maximum number of transmission data layers.

In an implementation, the terminal adopts the non-codebook transmission, and the number of SRS resources for different SRS resource sets for different panels in the symmetric panels supported by the terminal is a first maximum number of transmission data layers or a second maximum number of transmission layers.

In an implementation, the terminal adopts the codebook transmission, different panels in asymmetric panels supported by the terminal adopt different full power configuration modes, different SRS resource sets corresponding to different full power configuration modes have different numbers of SRS resources, and SRS resources have different numbers of ports.

In an implementation, the terminal adopts the codebook transmission, different SRS resource sets for different panels in asymmetric panels supported by the terminal have a same number of SRS resources, and SRS resources have different numbers of ports; and/or in response to the terminal adopting the non-codebook transmission, different SRS resource sets for different panels in the asymmetric panels supported by the terminal have a same number of SRS resources.

In an implementation, the terminal adopts the codebook transmission, different SRS resource sets for different panels in asymmetric panels supported by the terminal have different numbers of SRS resources, and SRS resources have different numbers of ports; and/or in response to the terminal adopting non-codebook transmission, different SRS resource sets for different panels in the asymmetric panels supported by the terminal have different numbers of SRS resources.

In an implementation, the numbers of SRS resources and/or the numbers of ports for SRS resources for different SRS resource sets for different panels in the asymmetric panels supported by the terminal are determined based on a first maximum number of transmission data layers or a second maximum number of transmission layers.

In an implementation, the terminal supports a Space Division Multiplexing (SDM) transmission mode of Single-Downlink Control Information (S-DCI) or Multi-Downlink Control Information (M-DCI) scheduling based PUSCH transmission mode using the STxMP transmission.

In an implementation, the terminal supports a Single Frequency Network (SFN) transmission mode of Single-Downlink Control Information (S-DCI) or Multi-Downlink Control Information (M-DCI) scheduling based PUSCH transmission mode using the STxMP transmission.

According to a second aspect of an embodiment of the present disclosure, there is provided a Physical Uplink Shared Channel (PUSCH) communication method. The method is performed by a terminal. The method includes: determining that the terminal supports uplink simultaneous transmission via multiple antenna panels STxMP transmission and a PUSCH transmission resource configuration parameter is configured; the PUSCH transmission resource configuration parameter corresponds to the terminal supporting a symmetric panel transmission and/or an asymmetric panel transmission, and the PUSCH transmission resource configuration parameter includes at least one of: a maximum number of transmission data layers, a codebook parameter, and a Sounding Reference Signal (SRS) resource set configuration parameter applied to a codebook based transmission and/or a non-codebook based transmission.

In an implementation, the maximum number of transmission data layers includes a first maximum number of transmission data layers; the first maximum number of transmission data layers is a maximum number of transmission data layers supported by a corresponding panel for a communication performed by the terminal based on Multiple-Transmission Reception Point (M-TRP), and is a maximum number of transmission data layers supported by a corresponding panel for a communication performed by the terminal based on a Single-Transmission Reception Point (S-TRP).

In an implementation, SRS resource sets for different panels in symmetric panels and/or asymmetric panels supported by the terminal correspond to a same first maximum number of transmission data layers.

In an implementation, different SRS resource sets for different panels in asymmetric panels supported by the terminal correspond to different first maximum numbers of transmission data layers.

In an implementation, the maximum number of transmission data layers further includes a second maximum number of transmission data layers; the second maximum number of transmission data layers is a maximum number of transmission data layers supported by the corresponding panel for the communication performed by the terminal based on the S-TRP.

In an implementation, different SRS resource sets for different panels in the symmetric panels and/or asymmetric panels supported by the terminal correspond to different second maximum numbers of transmission data layers.

In an implementation, SRS resource sets for different panels in the asymmetric panels supported by the terminal correspond to different second maximum numbers of transmission data layers.

In an implementation, the codebook parameter includes at least one of: a codebook subset, and a full power mode; different panels in symmetrical panels supported by the terminal correspond to a same codebook subset and/or a same full power mode; different panels in asymmetric panels supported by the terminal correspond to a same codebook subset and/or a same full power mode; or, different panels in the asymmetric panels supported by the terminal correspond to different codebook subsets and/or different full power modes.

In an implementation, the SRS resource set configuration parameter includes at least one of: the number of SRS resources in an SRS resource set and the number of ports of each SRS resource in the SRS resource set.

In an implementation, in response to the terminal adopting the codebook transmission, different SRS resource sets for different panels in symmetric panels and/or asymmetric panels supported by the terminal have a same number of SRS resources, and SRS resources have a same number of ports; and/or in response to the terminal adopting the non-codebook transmission, different SRS resource sets for different panels in the symmetric panels and/or asymmetric panels supported by the terminal have a same number of SRS resources.

In an implementation, the terminal adopts the codebook transmission, and the number of ports of SRS resources for different SRS resource sets for different panels in the symmetric panels supported by the terminal is a first maximum number of transmission data layers.

In an implementation, the terminal adopts the codebook transmission, and the number of ports of SRS resources for different SRS resource sets for different panels in the symmetric panels supported by the terminal is a first maximum number of transmission data layers and/or a second maximum number of transmission layers.

In an implementation, the terminal adopts the codebook transmission, a full power mode of the terminal is configured as a full power mode 2, and the SRS resource sets for different panels in the symmetric panels supported by the terminal have a maximum number of SRS resources of 4; in response to the full power mode of the terminal not being configured as the full power mode 2, the SRS resource sets for different panels in the symmetric panels supported by the terminal have a maximum number of SRS resources of 2; or, in response to the full power mode of the terminal not being configured as the full power mode 2, the maximum number of SRS resources for different SRS resource sets for different panels in the symmetric panels supported by the terminal is the first maximum number of transmission data layers or a second maximum number of transmission layers.

In an implementation, the terminal adopts the non-codebook transmission, and the number of SRS resources for different SRS resource sets for different panels in the symmetric panels supported by the terminal is a first maximum number of transmission data layers.

In an implementation, the terminal adopts the non-codebook transmission, and the number of SRS resources for different SRS resource sets for different panels in the symmetric panels supported by the terminal is a first maximum number of transmission data layers or a second maximum number of transmission layers.

In an implementation, the terminal adopts the codebook transmission, different panels in asymmetric panels supported by the terminal adopt different full power configuration modes, different SRS resource sets corresponding to different full power configuration modes have different numbers of SRS resources, and SRS resources have different numbers of ports.

In an implementation, the terminal adopts the codebook transmission, different SRS resource sets for different panels in asymmetric panels supported by the terminal have a same number of SRS resources, and SRS resources have different numbers of ports; and/or, in response to the terminal adopting the non-codebook transmission, different SRS resource sets for different panels in the asymmetric panels supported by the terminal have a same number of SRS resources.

In an implementation, the terminal adopts the codebook transmission, different SRS resource sets for different panels in asymmetric panels supported by the terminal have different numbers of SRS resources, and SRS resources have different numbers of ports; and/or, in response to the terminal adopting the non-codebook transmission, different SRS resource sets for different panels in the asymmetric panels supported by the terminal have different numbers of SRS resources.

In an implementation, the numbers of SRS resources and/or the numbers of ports for SRS resources for different SRS resource sets for different panels in the asymmetric panels supported by the terminal are determined based on a first maximum number of transmission data layers or a second maximum number of transmission layers.

In an implementation, the terminal supports a Space Division Multiplexing (SDM) transmission mode of Single-Downlink Control Information (S-DCI) or Multi-Downlink Control Information (M-DCI) scheduling based PUSCH transmission mode using the STxMP transmission.

In an implementation, the terminal supports a Single Frequency Network (SFN) transmission mode of Single-Downlink Control Information (S-DCI) or Multi-Downlink Control Information (M-DCI) scheduling based PUSCH transmission mode using the STxMP transmission.

According to a third aspect of an embodiment of the present disclosure, there is provided a Physical Uplink Shared Channel (PUSCH) communication apparatus. The apparatus is configured in a network device. The apparatus includes: a processing module configured to, in response to determining that a terminal supports uplink simultaneous transmission via multiple antenna panels STxMP transmission, configure a PUSCH transmission resource configuration parameter; the PUSCH transmission resource configuration parameter corresponds to the terminal supporting a symmetric panel transmission and/or an asymmetric panel transmission, and the PUSCH transmission resource configuration parameter includes at least one of: a maximum number of transmission data layers, a codebook parameter, and a Sounding Reference Signal (SRS) resource set configuration parameter applied to a codebook based transmission and/or a non-codebook based transmission.

In an implementation, the maximum number of transmission data layers includes a first maximum number of transmission data layers; the first maximum number of transmission data layers is a maximum number of transmission data layers supported by a corresponding panel for a communication performed by the terminal based on Multiple-Transmission Reception Point (M-TRP), and is a maximum number of transmission data layers supported by a corresponding panel for a communication performed by the terminal based on a Single-Transmission Reception Point (S-TRP).

In an implementation, SRS resource sets for different panels in symmetric panels and/or asymmetric panels supported by the terminal correspond to a same first maximum number of transmission data layers.

In an implementation, different SRS resource sets for different panels in asymmetric panels supported by the terminal correspond to different first maximum numbers of transmission data layers.

In an implementation, the maximum number of transmission data layers further includes a second maximum number of transmission data layers; the second maximum number of transmission data layers is a maximum number of transmission data layers supported by the corresponding panel for the communication performed by the terminal based on the S-TRP.

In an implementation, different SRS resource sets for different panels in the symmetric panels and/or asymmetric panels supported by the terminal correspond to different second maximum numbers of transmission data layers.

In an implementation, SRS resource sets for different panels in the asymmetric panels supported by the terminal correspond to different second maximum numbers of transmission data layers.

In an implementation, the codebook parameter includes at least one of: a codebook subset, and a full power mode; different panels in symmetrical panels supported by the terminal correspond to a same codebook subset and/or a same full power mode; different panels in asymmetric panels supported by the terminal correspond to a same codebook subset and/or a same full power mode; or different panels in the asymmetric panels supported by the terminal correspond to different codebook subsets and/or different full power modes.

In an implementation, the SRS resource set configuration parameter includes at least one of: the number of SRS resources in an SRS resource set and the number of ports of each SRS resource in the SRS resource set.

In an implementation, in response to the terminal adopting the codebook transmission, different SRS resource sets for different panels in symmetric panels and/or asymmetric panels supported by the terminal have a same number of SRS resources, and SRS resources have a same number of ports; and/or in response to the terminal adopting the non-codebook transmission, different SRS resource sets for different panels in the symmetric panels and/or asymmetric panels supported by the terminal have a same number of SRS resources.

In an implementation, the terminal adopts the codebook transmission, and the number of ports of SRS resources for different SRS resource sets for different panels in the symmetric panels supported by the terminal is a first maximum number of transmission data layers.

In an implementation, the terminal adopts the codebook transmission, and the number of ports of SRS resources for different SRS resource sets for different panels in the symmetric panels supported by the terminal is a first maximum number of transmission data layers and/or a second maximum number of transmission layers.

In an implementation, the terminal adopts the codebook transmission, a full power mode of the terminal is configured as a full power mode 2, and the SRS resource sets for different panels in the symmetric panels supported by the terminal have a maximum number of SRS resources of 4; in response to the full power mode of the terminal not being configured as the full power mode 2, the SRS resource sets for different panels in the symmetric panels supported by the terminal have a maximum number of SRS resources of 2; or in response to the full power mode of the terminal not being configured as the full power mode 2, the maximum number of SRS resources for different SRS resource sets for different panels in the symmetric panels supported by the terminal is the first maximum number of transmission data layers or a second maximum number of transmission layers.

In an implementation, the terminal adopts the non-codebook transmission, and the number of SRS resources for different SRS resource sets for different panels in the symmetric panels supported by the terminal is a first maximum number of transmission data layers.

In an implementation, the terminal adopts the non-codebook transmission, and the number of SRS resources for different SRS resource sets for different panels in the symmetric panels supported by the terminal is a first maximum number of transmission data layers or a second maximum number of transmission layers.

In an implementation, the terminal adopts the codebook transmission, different panels in asymmetric panels supported by the terminal adopt different full power configuration modes, different SRS resource sets corresponding to different full power configuration modes have different numbers of SRS resources, and SRS resources have different numbers of ports.

In an implementation, the terminal adopts the codebook transmission, different SRS resource sets for different panels in asymmetric panels supported by the terminal have a same number of SRS resources, and SRS resources have different numbers of ports; and/or, in response to the terminal adopting the non-codebook transmission, different SRS resource sets for different panels in the asymmetric panels supported by the terminal have a same number of SRS resources.

In an implementation, the terminal adopts the codebook transmission, different SRS resource sets for different panels in asymmetric panels supported by the terminal have different numbers of SRS resources, and SRS resources have different numbers of ports; and/or, in response to the terminal adopting non-codebook transmission, different SRS resource sets for different panels in the asymmetric panels supported by the terminal have different numbers of SRS resources.

In an implementation, the numbers of SRS resources and/or the numbers of ports for SRS resources for different SRS resource sets for different panels in the asymmetric panels supported by the terminal are determined based on a first maximum number of transmission data layers or a second maximum number of transmission layers.

In an implementation, the terminal supports a Space Division Multiplexing (SDM) transmission mode of Single-Downlink Control Information (S-DCI) or Multi-Downlink Control Information (M-DCI) scheduling based PUSCH transmission mode using the STxMP transmission.

In an implementation, the terminal supports a Single Frequency Network (SFN) transmission mode of Single-Downlink Control Information (S-DCI) or Multi-Downlink Control Information (M-DCI) scheduling based PUSCH transmission mode using the STxMP transmission.

According to a fourth aspect of an embodiment of the present disclosure, there is provided a Physical Uplink Shared Channel (PUSCH) communication apparatus. The apparatus is configured in a terminal. The apparatus includes: a processing module configured to determine that the terminal supports uplink simultaneous transmission via multiple antenna panels STxMP transmission and a PUSCH transmission resource configuration parameter is configured; the PUSCH transmission resource configuration parameter corresponds to the terminal supporting a symmetric panel transmission and/or an asymmetric panel transmission, and the PUSCH transmission resource configuration parameter includes at least one of: a maximum number of transmission data layers, a codebook parameter, and a Sounding Reference Signal (SRS) resource set configuration parameter applied to a codebook based transmission and/or a non-codebook based transmission.

In an implementation, the maximum number of transmission data layers includes a first maximum number of transmission data layers; the first maximum number of transmission data layers is a maximum number of transmission data layers supported by a corresponding panel for a communication performed by the terminal based on Multiple-Transmission Reception Point (M-TRP), and is a maximum number of transmission data layers supported by a corresponding panel for a communication performed by the terminal based on a Single-Transmission Reception Point (S-TRP).

In an implementation, SRS resource sets for different panels in symmetric panels and/or asymmetric panels supported by the terminal correspond to a same first maximum number of transmission data layers.

In an implementation, different SRS resource sets for different panels in asymmetric panels supported by the terminal correspond to different first maximum numbers of transmission data layers.

In an implementation, the maximum number of transmission data layers further includes a second maximum number of transmission data layers; the second maximum number of transmission data layers is a maximum number of transmission data layers supported by the corresponding panel for the communication performed by the terminal based on the S-TRP.

In an implementation, different SRS resource sets for different panels in the symmetric panels and/or asymmetric panels supported by the terminal correspond to different second maximum numbers of transmission data layers.

In an implementation, SRS resource sets for different panels in the asymmetric panels supported by the terminal correspond to different second maximum numbers of transmission data layers.

In an implementation, the codebook parameter includes at least one of: a codebook subset, and a full power mode; different panels in symmetrical panels supported by the terminal correspond to a same codebook subset and/or a same full power mode; different panels in asymmetric panels supported by the terminal correspond to a same codebook subset and/or a same full power mode; or different panels in the asymmetric panels supported by the terminal correspond to different codebook subsets and/or different full power modes.

In an implementation, the SRS resource set configuration parameter includes at least one of: the number of SRS resources in an SRS resource set and the number of ports of each SRS resource in the SRS resource set.

In an implementation, in response to the terminal adopting the codebook transmission, different SRS resource sets for different panels in symmetric panels and/or asymmetric panels supported by the terminal have a same number of SRS resources, and SRS resources have a same number of ports; and/or in response to the terminal adopting the non-codebook transmission, different SRS resource sets for different panels in the symmetric panels and/or asymmetric panels supported by the terminal have a same number of SRS resources.

In an implementation, the terminal adopts the codebook transmission, and the number of ports of SRS resources for different SRS resource sets for different panels in the symmetric panels supported by the terminal is a first maximum number of transmission data layers.

In an implementation, the terminal adopts the codebook transmission, and the number of ports of SRS resources for different SRS resource sets for different panels in the symmetric panels supported by the terminal is a first maximum number of transmission data layers and/or a second maximum number of transmission layers.

In an implementation, the terminal adopts the codebook transmission, a full power mode of the terminal is configured as a full power mode 2, and the SRS resource sets for different panels in the symmetric panels supported by the terminal have a maximum number of SRS resources of 4; in response to the full power mode of the terminal not being configured as the full power mode 2, the SRS resource sets for different panels in the symmetric panels supported by the terminal have a maximum number of SRS resources of 2; or, in response to the full power mode of the terminal not being configured as the full power mode 2, the maximum number of SRS resources for different SRS resource sets for different panels in the symmetric panels supported by the terminal is the first maximum number of transmission data layers or a second maximum number of transmission layers.

In an implementation, the terminal adopts the non-codebook transmission, and the number of SRS resources for different SRS resource sets for different panels in the symmetric panels supported by the terminal is a first maximum number of transmission data layers.

In an implementation, the terminal adopts the non-codebook transmission, and the number of SRS resources for different SRS resource sets for different panels in the symmetric panels supported by the terminal is a first maximum number of transmission data layers or a second maximum number of transmission layers.

In an implementation, the terminal adopts the codebook transmission, different panels in asymmetric panels supported by the terminal adopt different full power configuration modes, different SRS resource sets corresponding to different full power configuration modes have different numbers of SRS resources, and SRS resources have different numbers of ports.

In an implementation, the terminal adopts the codebook transmission, different SRS resource sets for different panels in asymmetric panels supported by the terminal have a same number of SRS resources, and SRS resources have different numbers of ports; and/or, in response to the terminal adopting the non-codebook transmission, different SRS resource sets for different panels in the asymmetric panels supported by the terminal have a same number of SRS resources.

In an implementation, the terminal adopts the codebook transmission, different SRS resource sets for different panels in asymmetric panels supported by the terminal have different numbers of SRS resources, and SRS resources have different numbers of ports; and/or, in response to the terminal adopting the non-codebook transmission, different SRS resource sets for different panels in the asymmetric panels supported by the terminal have different numbers of SRS resources.

In an implementation, the numbers of SRS resources and/or the numbers of ports for SRS resources for different SRS resource sets for different panels in the asymmetric panels supported by the terminal are determined based on a first maximum number of transmission data layers or a second maximum number of transmission layers.

In an implementation, the terminal supports a Space Division Multiplexing (SDM) transmission mode of Single-Downlink Control Information (S-DCI) or Multi-Downlink Control Information (M-DCI) scheduling based PUSCH transmission mode using the STxMP transmission.

In an implementation, the terminal supports a Single Frequency Network (SFN) transmission mode of Single-Downlink Control Information (S-DCI) or Multi-Downlink Control Information (M-DCI) scheduling based PUSCH transmission mode using the STxMP transmission.

The technical solutions provided by the embodiments of the present disclosure may include the following beneficial effects. In response to determining that the terminal supports uplink simultaneous transmission via multiple antenna panels STxMP transmission, the PUSCH transmission resource configuration parameter is configured. By configuring the maximum number of transmission layers, the codebook parameter and SRS resource set(s) for the terminal in a PUSCH transmission, the network device indicates the terminal to dynamically switch between M-TRP and S-TRP through an SRS resource indicator set, thereby realizing an indication scheme of different precoding indications in different transmission modes, and enabling the uplink PUSCH transmission to support higher transmission rate and throughput.

It is to be understood that the foregoing general description and the following detailed description are illustrative and explanatory only and are not restrictive of the present disclosure.

**BRIEF DESCRIPTION OF THE DRAWINGS**

The accompanying drawings, which are incorporated in and constitute a part of the specification, illustrate embodiments consistent with the present disclosure and, together with the description, serve to explain the principles of the present disclosure.

FIG. 1 is a schematic diagram of a wireless communication system according to an example embodiment.
FIG. 2 is a schematic diagram of an MP-MTRP transmission scenario under S-DCI scheduling according to an example embodiment.
FIG. 3 is a schematic diagram of an MP-MTRP transmission scenario under M-DCI scheduling according to an example embodiment.
FIG. 4 is a flowchart of a Physical Uplink Shared Channel (PUSCH) communication method according to an example embodiment.
FIG. 5 is a flowchart of another Physical Uplink Shared Channel (PUSCH) communication method according to an example embodiment.
FIG. 6 is a block diagram of a Physical Uplink Shared Channel (PUSCH) communication apparatus according to an example embodiment.
FIG. 7 is a block diagram of another Physical Uplink Shared Channel (PUSCH) communication apparatus according to an example embodiment.
FIG. 8 is a block diagram of a Physical Uplink Shared Channel (PUSCH) communication apparatus according to an example embodiment.
FIG. 9 is a block diagram of a Physical Uplink Shared Channel (PUSCH) communication apparatus according to an example embodiment.

**DETAILED DESCRIPTION**

Here, example embodiments will be described in detail, examples of which are shown in the accompanying drawings. When the following description refers to the drawings, unless otherwise indicated, the same numbers in different drawings represent the same or similar elements. The implementations described in the following example embodiments do not represent all implementations consistent with the present disclosure.

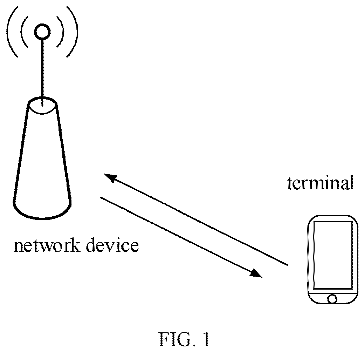

The communication methods of the embodiments of the present disclosure may be applied to a wireless communication system shown in FIG. 1. Referring to FIG. 1, the wireless communication system includes a network device and a terminal. The terminal is connected to the network device through a wireless resource and performs a data transmission.

It is understandable that the wireless communication system shown in FIG. 1 is only for schematic illustration, and the wireless communication system may further include other network devices, such as a core network device, a wireless relay device, and a wireless backhaul device, etc., which are not shown in FIG. 1. The embodiments of the present disclosure do not limit the number of network device(s) and terminal(s) included in the wireless communication system.

It can be further understood that the wireless communication system of the embodiments of the present disclosure is a network that provides wireless communication functions. The wireless communication system may adopt different communication technologies, such as Code Division Multiple Access (CDMA), Wideband Code Division Multiple Access (WCDMA), Time Division Multiple Access (TDMA), Frequency Division Multiple Access (FDMA), Orthogonal Frequency Division Multiple Access (OFDMA), Single Carrier Frequency Division Multiple Access (SC-FDMA), carrier sense multiple access/collision avoidance (Carrier Sense Multiple Access with Collision Avoidance). According to factors such as the capacity, rate, latency, etc. of different networks, the networks may be divided into a 2nd Generation (2G) network, a 3G network, a 4G network or a future evolved network, such as a 5G network. The 5G network may also be called a New Radio (NR) network. For the convenience of description, the present disclosure sometimes refers to the wireless communication network as a network.

Further, the network device involved in the present disclosure may also be referred to as a wireless access network device. The wireless access network device may be: a base station, an evolved base station (evolved node B, base station), a home base station, an Access Point (AP) in a wireless fidelity (WiFi) system, a wireless relay node, a wireless backhaul node, a Transmission Point (TP) or a Transmission and Reception Point (TRP), etc. It may also be a gNB in an NR system, or it may also be a component or a part of devices constituting a base station. It should be understood that in the embodiments of the present disclosure, the specific technology and specific device form adopted by the network device are not limited. In the present disclosure, the network device may provide communication coverage for a specific geographical area and may communicate with a terminal located in the coverage area (cell). In addition, when the system is a vehicle-to-everything (V2X) communication system, the network device may also be a vehicle-mounted device.

Furthermore, the terminal involved in the present disclosure may also be referred to as a terminal device, User Equipment (UE), a Mobile Station (MS), a Mobile Terminal (MT), etc., which is a device that provides voice and/or data connectivity to a user. For example, the terminal may be a handheld device with a wireless connection function, a vehicle-mounted device, etc. At present, some examples of terminals are: a smart phone (Mobile Phone), Customer Premise Equipment (CPE), a pocket computer (Pocket Personal Computer, PPC), a handheld computer, a Personal Digital Assistant (PDA), a laptop computer, a tablet computer, a wearable device, or a vehicle-mounted device, etc. In addition, when the system is a vehicle-to-everything (V2X) communication system, the terminal device may also be a vehicle-mounted device. It should be understood that the embodiments of the present disclosure do not limit the specific technology and specific device form adopted by the terminal.

In the present disclosure, a data transmission is performed between a network device and a terminal based on a beam. The network device and the terminal may perform an enhanced PUSCH uplink transmission based on Multi-TRP/Multi-panel. Specifically, the PUSCH uplink transmission scheme includes a codebook based uplink transmission and a non-codebook based uplink transmission scheme.

In the related art, the terminal supports a codebook based simultaneous uplink transmission (STxMP) via multiple panels. In the codebook based simultaneous uplink transmission, the terminal needs to be configured with at most one Sounding Reference Signal (SRS) resource set for the codebook based uplink transmission. The SRS resource set may be configured with multiple SRS resources, and the network device feeds back an SRS resource indicator (Sounding Reference Signal resource indicator, SRI) of $\left\lceil \log_2\left(N_{SRS}\right)\right\rceil$ bits according to the number of SRS resources ($N_{SRS}$) in the SRS resource set, so as to indicate selection of SRS resources through SRI indication.

The following uses Tables 1 to 3 as examples to provide methods for indicating multiple SRS resources using SRI. In Tables 1 to 3, SRI(s) indicates the number of SRI indications, $N_{SRS}$ is the number of SRS resources.

Table 1

| Bit field mapped to index | SRI(s), $N_{SRS}$ = 2 |
|---|---|
| 0 | 0 |
| 1 | 1 |

Table 2

| Bit field mapped to index | SRI(s), $N_{SRS}$ = 3 |
|---|---|
| 0 | 0 |
| 1 | 1 |
| 2 | 2 |
| 3 | reserved |

Table 3

| Bit field mapped to index | SRI(s), $N_{SRS}$ = 4 |
|---|---|
| 0 | 0 |
| 1 | 1 |
| 2 | 2 |
| 3 | 3 |

In the codebook based PUSCH transmission, the network device determines a precoding matrix (Transmission Precoding Matrix Indicator, TPMI) and the number of transmission layers (Rank Indicator, RI) used by the terminal for actual transmission and notifies them to the terminal. Data of the terminal in the subsequent uplink transmission needs to be precoded using the TPMI and RI specified by the network device, and the precoded data is mapped to a corresponding antenna port according to a spatial filter (Spatial Relation Info) corresponding to SRS resource(s) indicated by an SRI.

The following Tables 4 to 12 are TPMI tables for indicating TPMI and RI.

Table 4

| Bit field mapped to index | codebookSubset = fullyAndPartialAndNonCoherent | Bit field mapped to index | codebookSubset = partialAndNonCoherent | Bit field mapped to index | codebookSubset= nonCoherent |
|---|---|---|---|---|---|
| 0 | 1 layer: TPMI=0 | 0 | 1 layer: TPMI=0 | 0 | 1 layer: TPMI=0 |
| 1 | 1 layer: TPMI=1 | 1 | 1 layer: TPMI=1 | 1 | 1 layer: TPMI=1 |
| ... | ... | ... | ... | ... | ... |
| 3 | 1 layer: TPMI=3 | 3 | 1 layer: TPMI=3 | 3 | 1 layer: TPMI=3 |
| 4 | 2 layers: TPMI=0 | 4 | 2 layers: TPMI=0 | 4 | 2 layers: TPMI=0 |
| ... | ... | ... | ... | ... | ... |
| 9 | 2 layers: TPMI=5 | 9 | 2 layers: TPMI=5 | 9 | 2 layers: TPMI=5 |
| 10 | 3 layers: TPMI=0 | 10 | 3 layers: TPMI=0 | 10 | 3 layers: TPMI=0 |
| 11 | 4 layers: TPMI=0 | 11 | 4 layers: TPMI=0 | 11 | 4 layers: TPMI=0 |
| 12 | 1 layer: TPMI=4 | 12 | 1 layer: TPMI=4 | 12-15 | reserved |
| ... | ... | ... | ... | | |
| 19 | 1 layer: TPMI=11 | 19 | 1 layer: TPMI=11 | | |
| 20 | 2 layers: TPMI=6 | 20 | 2 layers: TPMI=6 | | |
| ... | ... | ... | ... | | |
| 27 | 2 layers: TPMI=13 | 27 | 2 layers: TPMI=13 | | |
| 28 | 3 layers: TPMI=1 | 28 | 3 layers: TPMI=1 | | |
| 29 | 3 layers: TPMI=2 | 29 | 3 layers: TPMI=2 | | |
| 30 | 4 layers: TPMI=1 | 30 | 4 layers: TPMI=1 | | |
| 31 | 4 layers: TPMI=2 | 31 | 4 layers: TPMI=2 | | |
| 32 | 1 layers: TPMI=12 | | | | |
| ... | ... | | | | |
| 47 | 1 layers: TPMI=27 | | | | |
| 48 | 2 layers: TPMI=14 | | | | |
| ... | ... | | | | |
| 55 | 2 layers: TPMI=21 | | | | |
| 56 | 3 layers: TPMI=3 | | | | |
| ... | ... | | | | |
| 59 | 3 layers: TPMI=6 | | | | |
| 60 | 4 layers: TPMI=3 | | | | |
| 61 | 4 layers: TPMI=4 | | | | |
| 62-63 | reserved | | | | |

Table 5

| Bit field mapped to index | codebookSubset = partialAndNonCoherent | Bit field mapped to index | codebookSubset= nonCoherent |
|---|---|---|---|
| 0 | 1 layer: TPMI=0 | 0 | 1 layer: TPMI=0 |
| 1 | 1 layer: TPMI=1 | 1 | 1 layer: TPMI=1 |
| ... | ... | ... | ... |
| 3 | 1 layer: TPMI=3 | 3 | 1 layer: TPMI=3 |
| 4 | 2 layers: TPMI=0 | 4 | 2 layers: TPMI=0 |
| ... | ... | ... | ... |
| 9 | 2 layers: TPMI=5 | 9 | 2 layers: TPMI=5 |
| 10 | 1 layer: TPMI=13 | 10 | 1 layer: TPMI=13 |
| 11 | 2 layer: TPMI=6 | 11 | 2 layer: TPMI=6 |
| 12 | 1 layer: TPMI=4 | 12-15 | Reserved |
| ... | ... | | |
| 20 | 1 layer: TPMI=12 | | |
| 21 | 1 layer: TPMI=14 | | |
| 22 | 1 layer: TPMI=15 | | |
| 23 | 2 layers: TPMI=7 | | |
| ... | ... | | |
| 29 | 2 layers: TPMI=13 | | |
| 30-31 | Reserved | | |

Table 6

| Bit field mapped to index | codebookSubset = partialAndNonCoherent | Bit field mapped to index | codebookSubset= nonCoherent |
|---|---|---|---|
| 0 | 1 layer: TPMI=0 | 0 | 1 layer: TPMI=0 |
| 1 | 1 layer: TPMI=1 | 1 | 1 layer: TPMI=1 |
| ... | ... | ... | ... |
| 3 | 1 layer: TPMI=3 | 3 | 1 layer: TPMI=3 |
| 4 | 2 layers: TPMI=0 | 4 | 2 layers: TPMI=0 |
| ... | ... | ... | ... |
| 9 | 2 layers: TPMI=5 | 9 | 2 layers: TPMI=5 |
| 10 | 3 layers: TPMI=0 | 10 | 3 layers: TPMI=0 |
| 11 | 4 layers: TPMI=0 | 11 | 4 layers: TPMI=0 |
| 12 | 1 layer: TPMI=13 | 12 | 1 layer: TPMI=13 |
| 13 | 2 layer: TPMI=6 | 13 | 2 layer: TPMI=6 |
| 14 | 3 layer: TPMI=1 | 14 | 3 layer: TPMI=1 |
| 15 | 1 layer: TPMI=4 | 15 | Reserved |
| ... | ... | | |
| 23 | 1 layer: TPMI=12 | | |
| 24 | 1 layer: TPMI=14 | | |
| 25 | 1 layer: TPMI=15 | | |

(continued)

| Bit field mapped to index | codebookSubset = partialAndNonCoherent | Bit field mapped to index | codebookSubset= nonCoherent |
|---|---|---|---|
| 26 | 2 layers: TPMI=7 | | |
| ... | ... | | |
| 32 | 2 layers: TPMI=13 | | |
| 33 | 3 layers: TPMI=2 | | |
| 34 | 4 layers: TPMI=1 | | |
| 35 | 4 layers: TPMI=2 | | |
| 36-63 | Reserved | | |

Table 7

| Bit field mapped to index | codebookSubset = fullyAndPartialAndNonCoherent | Bit field mapped to index | codebookSubset= partialAndNonCoherent | Bit field mapped to index | codebookSubset= nonCoherent |
|---|---|---|---|---|---|
| 0 | 1 layer: TPMI=0 | 0 | 1 layer: TPMI=0 | 0 | 1 layer: TPMI=0 |
| 1 | 1 layer: TPMI=1 | 1 | 1 layer: TPMI=1 | 1 | 1 layer: TPMI=1 |
| ... | ... | ... | ... | ... | ... |
| 3 | 1 layer: TPMI=3 | 3 | 1 layer: TPMI=3 | 3 | 1 layer: TPMI=3 |
| 4 | 1 layer: TPMI=4 | 4 | 1 layer: TPMI=4 | | |
| ... | ... | ... | ... | | |
| 11 | 1 layer: TPMI=11 | 11 | 1 layer: TPMI=11 | | |
| 12 | 1 layers: TPMI=12 | 12-15 | reserved | | |
| ... | ... | | | | |
| 27 | 1 layers: TPMI=27 | | | | |
| 28-31 | reserved | | | | |

Table 8

| Bit field mapped to index | codebookSubset= partialAndNonCoherent | Bit field mapped to index | codebookSubset= nonCoherent |
|---|---|---|---|
| 0 | 1 layer: TPMI=0 | 0 | 1 layer: TPMI=0 |
| 1 | 1 layer: TPMI=1 | 1 | 1 layer: TPMI=1 |
| ... | ... | ... | ... |
| 3 | 1 layer: TPMI=3 | 3 | 1 layer: TPMI=3 |
| 4 | 1 layer: TPMI=13 | 4 | 1 layer: TPMI=13 |
| 5 | 1 layer: TPMI=4 | 5-7 | Reserved |
| ... | ... | | |
| 13 | 1 layer: TPMI=12 | | |
| 14 | 1 layer: TPMI=14 | | |
| 15 | 1 layer: TPMI=15 | | |

Table 9

| Bit field mapped to index | codebookSubset = fullyAndPartialAndNon Coherent | Bit field mapped to index | codebookSubset = nonCoherent |
|---|---|---|---|
| 0 | 1 layer: TPMI=0 | 0 | 1 layer: TPMI=0 |
| 1 | 1 layer: TPMI=1 | 1 | 1 layer: TPMI=1 |
| 2 | 2 layers: TPMI=0 | 2 | 2 layers: TPMI=0 |
| 3 | 1 layer: TPMI=2 | 3 | reserved |
| 4 | 1 layer: TPMI=3 | | |
| 5 | 1 layer: TPMI=4 | | |
| 6 | 1 layer: TPMI=5 | | |
| 7 | 2 layers: TPMI=1 | | |
| 8 | 2 layers: TPMI=2 | | |
| 9-15 | reserved | | |

Table 10

| Bit field mapped to index | codebookSubset= nonCoherent |
|---|---|
| 0 | 1 layer: TPMI=0 |
| 1 | 1 layer: TPMI=1 |
| 2 | 2 layers: TPMI=0 |
| 3 | 1 layer: TPMI=2 |

Table 11

| Bit field mapped to index | codebookSubset = fullyAndPartialAndNon Coherent | Bit field mapped to index | codebookSubset = nonCoherent |
|---|---|---|---|
| 0 | 1 layer: TPMI=0 | 0 | 1 layer: TPMI=0 |
| 1 | 1 layer: TPMI=1 | 1 | 1 layer: TPMI=1 |
| 2 | 1 layer: TPMI=2 | | |
| 3 | 1 layer: TPMI=3 | | |
| 4 | 1 layer: TPMI=4 | | |
| 5 | 1 layer: TPMI=5 | | |
| 6-7 | reserved | | |

Table 12

| Bit field mapped to index | codebookSubset= nonCoherent |
|---|---|
| 0 | 1 layer: TPMI=0 |
| 1 | 1 layer: TPMI=1 |
| 2 | 1 layer: TPMI=2 |
| 3 | Reserved |

The *Bit field mapped to index* indicates the bit field mapped to the index, codebookSubset indicates a codebook subset, and the transmission capability of the codebook subset includes: fullyAndPartialAndNonCoherent (fully coherent transmission), partialAndNonCoherent (partially coherent transmission) and nonCoherent (non-coherent transmission). Taking the above Table 4 as an example, Table 4 shows the precoding information and number of layers in the codebook subset for 4 antenna ports and the maximum rank number (Rank) of 2, or 3 or 4.

In the above Tables 4 to 12, each TPMI is used to indicate a precoding, and the following Table 13 is the codeword corresponding to the single-layer transmission for 4 antenna ports.

Table 13

| TPMI index | W (ordered from left to right in increasing order of TPMI index) | | | | | | | |
|---|---|---|---|---|---|---|---|---|
| 0 - 7 | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ |
| 8 - 15 | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ | $\frac{1}{2}\begin{bmatrix}1\\1\\1\\-1\end{bmatrix}$ | $\frac{1}{2}\begin{bmatrix}1\\1\\j\\j\end{bmatrix}$ | $\frac{1}{2}\begin{bmatrix}1\\1\\-1\\1\end{bmatrix}$ | $\frac{1}{2}\begin{bmatrix}1\\1\\-j\\-j\end{bmatrix}$ |
| 16 - 23 | $\frac{1}{2}\begin{bmatrix}1\\j\\1\\j\end{bmatrix}$ | $\frac{1}{2}\begin{bmatrix}1\\j\\j\\1\end{bmatrix}$ | $\frac{1}{2}\begin{bmatrix}1\\j\\-1\\-j\end{bmatrix}$ | $\frac{1}{2}\begin{bmatrix}1\\j\\-j\\-1\end{bmatrix}$ | $\frac{1}{2}\begin{bmatrix}1\\-1\\1\\1\end{bmatrix}$ | $\frac{1}{2}\begin{bmatrix}1\\-1\\j\\-j\end{bmatrix}$ | $\frac{1}{2}\begin{bmatrix}1\\-1\\-1\\-1\end{bmatrix}$ | $\frac{1}{2}\begin{bmatrix}1\\-1\\-j\\j\end{bmatrix}$ |
| 24 - 27 | $\frac{1}{2}\begin{bmatrix}1\\-j\\1\\-j\end{bmatrix}$ | $\frac{1}{2}\begin{bmatrix}1\\-j\\j\\-1\end{bmatrix}$ | $\frac{1}{2}\begin{bmatrix}1\\-j\\-1\\j\end{bmatrix}$ | $\frac{1}{2}\begin{bmatrix}1\\-j\\-j\\1\end{bmatrix}$ | - | - | - | - |

In the research on related communication protocols, the Physical Downlink Control Channel (PDCCH), Physical Uplink Control Channel (PUCCH) and Physical Uplink Shared Channel (PUSCH) are enhanced.

In the non-codebook based PUSCH transmission, the terminal needs to be configured with at most one SRS resource set for the non-codebook based uplink transmission. The SRS resource set may be configured with multiple SRS resources. The network device feeds back an SRI according to the number ($N_{SRS}$) of SRS resources in the SRS resource set and the maximum number of transmission data layers (maxRank) to indicate selection of SRS resources through SRI indication.

The following uses Tables 14 to 17 as examples to provide SRI indication methods for multiple SRS resources under conditions of different maximum numbers of transmission data layers. The maxRank value in Table 14 is 1, the maxRank value in Table 15 is 2, the maxRank value in Table 16 is 3, and the maxRank value in Table 17 is 4.

Table 14

| Bit field mapped to index | SRI(s), $N_{SRS}$ = 2 | Bit field mapped to index | SRI(s), $N_{SRS}$ = 3 | Bit field mapped to index | SRI(s), $N_{SRS}$ = 4 |
|---|---|---|---|---|---|
| 0 | 0 | 0 | 0 | 0 | 0 |
| 1 | 1 | 1 | 1 | 1 | 1 |
| | | 2 | 2 | 2 | 2 |
| | | 3 | reserved | 3 | 3 |

Table 15

| Bit field mapped to index | SRI(s), $N_{SRS}$ = 2 | Bit field mapped to index | SRI(s), $N_{SRS}$ = 3 | Bit field mapped to index | SRI(s), $N_{SRS}$ = 4 |
|---|---|---|---|---|---|
| 0 | 0 | 0 | 0 | 0 | 0 |

(continued)

| Bit field mapped to index | SRI(s), $N_{SRS}$ = 2 | Bit field mapped to index | SRI(s), $N_{SRS}$ = 3 | Bit field mapped to index | SRI(s), $N_{SRS}$ = 4 |
|---|---|---|---|---|---|
| 1 | 1 | 1 | 1 | 1 | 1 |
| 2 | 0,1 | 2 | 2 | 2 | 2 |
| 3 | reserved | 3 | 0,1 | 3 | 3 |
| | | 4 | 0,2 | 4 | 0,1 |
| | | 5 | 1,2 | 5 | 0,2 |
| | | 6-7 | reserved | 6 | 0,3 |
| | | | | 7 | 1,2 |
| | | | | 8 | 1,3 |
| | | | | 9 | 2,3 |
| | | | | 10-15 | reserved |

Table 16

| Bit field mapped to index | SRI(s), $N_{SRS}$ = 2 | Bit field mapped to index | SRI(s), $N_{SRS}$ = 3 | Bit field mapped to index | SRI(s), $N_{SRS}$ = 4 |
|---|---|---|---|---|---|
| 0 | 0 | 0 | 0 | 0 | 0 |
| 1 | 1 | 1 | 1 | 1 | 1 |
| 2 | 0,1 | 2 | 2 | 2 | 2 |
| 3 | reserved | 3 | 0,1 | 3 | 3 |
| | | 4 | 0,2 | 4 | 0,1 |
| | | 5 | 1,2 | 5 | 0,2 |
| | | 6 | 0,1,2 | 6 | 0,3 |
| | | 7 | reserved | 7 | 1,2 |
| | | | | 8 | 1,3 |
| | | | | 9 | 2,3 |
| | | | | 10 | 0,1,2 |
| | | | | 11 | 0,1,3 |
| | | | | 12 | 0,2,3 |
| | | | | 13 | 1,2,3 |
| | | | | 14-15 | reserved |

Table 17

| Bit field mapped to index | SRI(s), $N_{SRS}$ = 2 | Bit field mapped to index | SRI(s), $N_{SRS}$ = 3 | Bit field mapped to index | SRI(s), $N_{SRS}$ = 4 |
|---|---|---|---|---|---|
| 0 | 0 | 0 | 0 | 0 | 0 |
| 1 | 1 | 1 | 1 | 1 | 1 |
| 2 | 0,1 | 2 | 2 | 2 | 2 |
| 3 | reserved | 3 | 0,1 | 3 | 3 |
| | | 4 | 0,2 | 4 | 0,1 |
| | | 5 | 1,2 | 5 | 0,2 |

(continued)

| Bit field mapped to index | SRI(s), $N_{SRS} = 2$ | Bit field mapped to index | SRI(s), $N_{SRS} = 3$ | Bit field mapped to index | SRI(s), $N_{SRS} = 4$ |
|---|---|---|---|---|---|
|  |  | 6 | 0,1,2 | 6 | 0,3 |
|  |  | 7 | reserved | 7 | 1,2 |
|  |  |  |  | 8 | 1,3 |
|  |  |  |  | 9 | 2,3 |
|  |  |  |  | 10 | 0,1,2 |
|  |  |  |  | 11 | 0,1,3 |
|  |  |  |  | 12 | 0,2,3 |
|  |  |  |  | 13 | 1,2,3 |
|  |  |  |  | 14 | 0,1,2,3 |
|  |  |  |  | 15 | reserved |

The uplink PUSCH transmission is transmitted towards TRP directions of multiple base stations. For example, in a collaborative transmission under a TDM transmission mode, different repetitions of the same information on the PUSCH are sent to different TRPs of the base stations through different Transmission Occasions (TOs) in a time domain. This method has relatively low requirements on terminal capabilities, does not require the capability of supporting simultaneous transmitting beams, and has a large transmission latency.

For the uplink, PUSCH channels facing different panels/TRPs/TCIs may actually pass through channels with very different spatial characteristics. Therefore, it is considered that the QCL-D of the PUSCH channels in different sending directions is different.

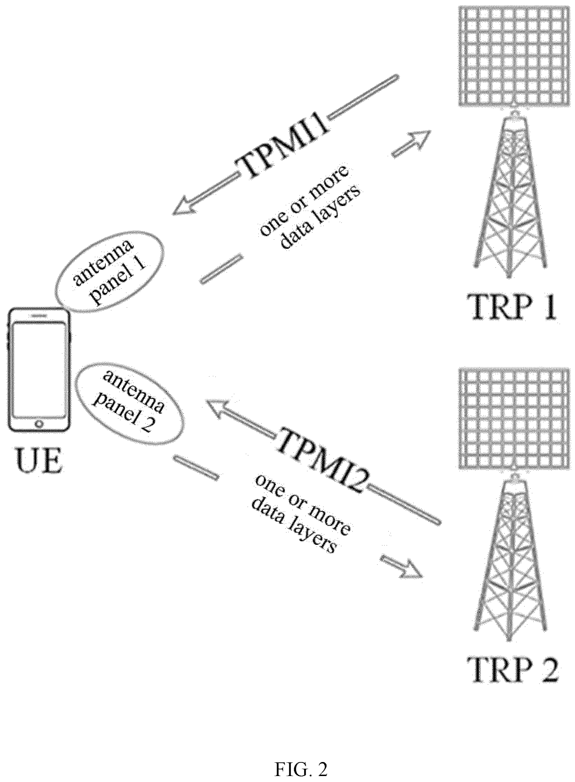

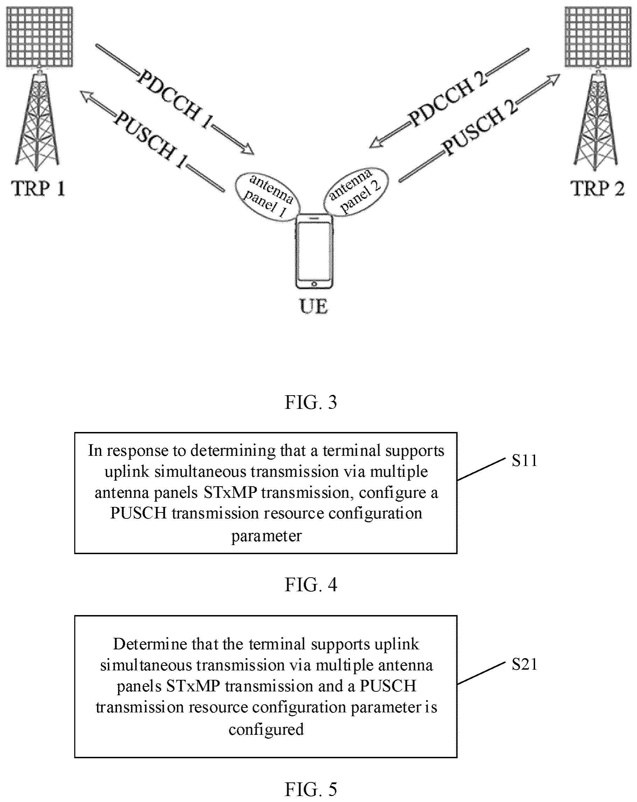

In the PUSCH enhancement based on Multi-TRP, multi-panel/TRP transmissions may be scheduled based on a single PDCCH, such as single downlink control signaling (Single Downlink Control Information, S-DCI). FIG. 2 shows a schematic diagram of an MP-MTRP transmission scenario under S-DCI scheduling. Referring to FIG. 2, a terminal UE sends a TPMI1 to a TRP1 on a panel1 and sends a TPMI2 to a TRP2 on a panel2. Multi-panel/TRP transmissions may also be scheduled based on different PDCCHs, such as multiple downlink control signaling (Multi-Downlink Control Information, M-DCI). FIG. 3 shows a schematic diagram of an MP-MTRP transmission scenario under M-DCI scheduling.

In non-codebook based and codebook based M-TRP transmissions in the related art, an SRI field in a DCI indicates SRS resources in an SRS resource set. Since R17 supports two SRS resource sets, in the non-codebook based M-TRP PUSCH repetition transmission, the DCI format 0_1/0_2 includes two SRI fields associated with the two SRS resource sets. Each SRI field indicates an SRI for a TRP. The design of the first SRI field is based on the R15/16 framework, and all repetition transmissions use the same number of layers.

For the non-codebook based transmission, the first SRI field is used to determine the entry of the second SRI field, and the second SRI field only includes the SRI(s) combinations associated with the indicated number of layers of the first SRI field. The number of bits N2 for the second SRI field is determined by the maximum number of codepoint(s) per transmission layer among all transmission layers associated with the first SRI field.

For uplink synchronous transmission via multiple panels, the coordinated transmission scheduling of a Transport Block (TB) of PUSCH based on a single DCI includes a variety of different transmission schemes. Each transmission scheme is briefly described below.

One scheme is a Space Division Multiplexing (SDM) multiplexing scheme. One TB of PUSCH is sent on the same time-frequency resource(s) towards two different TRPs through corresponding DMRS ports or port combinations allocated on different panels respectively, and different panels/TRPs/Transmission Occasions (TOs) are associated with different Transmission Configuration Indicator (TCI) states, i.e. beams. On this basis, the SDM scheme is further divided into two types, SDM-A and SDM-B. SDM-A: different parts of one TB of PUSCH are sent on the same time-frequency resource(s) towards two different TRPs through corresponding DMRS ports or port combinations allocated on different panels respectively, and different panels/TRPs/Transmission Occasions (TOs) are associated with different TCI states, i.e. beams. SDM-B: repetitions of the same TB of PUSCH corresponding to different RV versions are sent on the same time-frequency resource(s) towards two different TRPs through corresponding DMRS ports or port combinations allocated on different panels respectively, and different panels/TRPs/Transmission Occasions (TOs) are associated with different TCI states, i.e. beams.

Another scheme is a Single Frequency Network (SFN) multiplexing scheme. One TB of PUSCH is sent on the same time-frequency resource(s) towards two different TRPs through the same DMRS port or port combination allocated on different panels, and different panels/TRPs/Transmission Occasions (TOs) are associated with different TCI states, i.e. beams.

For simultaneous uplink PUSCH transmission based on multiple panels of a terminal, one or more of the above schemes may be supported.

The present disclosure provides a Physical Uplink Shared Channel (PUSCH) communication method. The method can solve the problem of supporting SRI/TPMI-associated PUSCH transmission resource configuration method under STxMP transmission by configuring the maximum number of transmission layers, a codebook parameter and SRS resource set(s) for the terminal in the PUSCH transmission, supports the multi-panel transmission mechanism of the terminal, and ensures that the PUSCH transmission supports higher transmission rate and throughput on the basis of flexibility of the terminal.

FIG. 4 is a flowchart of a Physical Uplink Shared Channel (PUSCH) communication method according to an example embodiment. As shown in FIG. 4, the Physical Uplink Shared Channel (PUSCH) communication method is applied in a terminal and includes the following step.

In step S11, in response to determining that the terminal supports uplink simultaneous transmission via multiple antenna panels STxMP transmission, a PUSCH transmission resource configuration parameter is configured.

The PUSCH transmission resource configuration parameter corresponds to the terminal supporting a symmetric panel transmission and/or an asymmetric panel transmission, and the PUSCH transmission resource configuration parameter includes at least one of: a maximum number of transmission data layers, a codebook parameter, and an SRS resource set configuration parameter.

The SRS resource set configuration is applied to a codebook based transmission and/or a non-codebook based transmission.

In the Physical Uplink Shared Channel (PUSCH) communication method provided by an embodiment of the present disclosure, a group of symmetric panels or a group of asymmetric panels correspond to a group of PUSCH transmission resource configuration parameters.

A group of PUSCH transmission resource configuration parameters may include one or more of: the maximum number of transmission data layers, the codebook parameter, and the SRS resource set configuration parameter. For example, a group of PUSCH transmission resource configuration parameters may include the maximum number of transmission data layers, the codebook parameter, and the SRS resource set configuration parameter. Alternatively, a group of PUSCH transmission resource configuration parameters may include pairwise combinations of the maximum number of transmission data layers, the codebook parameter, and the SRS resource set configuration parameter. For example, a group of PUSCH transmission resource configuration parameters may include the maximum number of transmission data layers and the codebook parameter, or may include the maximum number of transmission data layers and the SRS resource set configuration parameter, or may include the codebook parameter and the SRS resource set configuration parameter. Alternatively, a group of PUSCH transmission resource configuration parameters may include one of the maximum number of transmission data layers, the codebook parameter, and the SRS resource set configuration parameter. For example, a group of PUSCH transmission resource configuration parameters may include the maximum number of transmission data layers, or the codebook parameter, or the SRS resource set configuration parameter.

The terminal is generally configured with multiple physical panels, and the capabilities of different panels may be the same or different. For example, panels with different panel capabilities have different numbers of SRS ports, and/or support different maximum numbers of transmission data layers, and/or correspond to different transmit powers, etc.

The network device determines whether the terminal is currently suitable for uplink simultaneous transmission via multiple panels. If the terminal is currently suitable for uplink simultaneous transmission via multiple panels and is scheduled at the same time, the network device directly or indirectly indicates the relevant transmission. The relevant transmission includes specific beam indication information for the terminal, the number of transmission data layers used for the transmission, and the allocation of Demodulation Reference Signal (DMRS) port(s) to be used, and precoding indication information, etc.

In an example, the symmetric panel transmission refers to a transmission based on a group of panels with the same panel capability(capabilities) among multiple panels of a terminal. The symmetric panels may be two panels with the same number of SRS ports, the same maximum number of data transmission layers, and the same transmit power.

In an example, the asymmetric panel transmission refers to a transmission based on a group of panels with different panel capabilities among multiple panels of a terminal. The asymmetric panels may be two panels with different numbers of SRS ports, and/or different maximum numbers of data transmission layers, and/or different transmit powers.

In an embodiment of the present disclosure, when the network device determines that the terminal supports uplink simultaneous transmission via multiple panels, the network device configures the PUSCH transmission resource configuration parameter(s) respectively corresponding to the symmetric panel(s) and/or asymmetric panel(s) of the terminal, so that the network device indicates the terminal to dynamically switch between M-TRP and S-TRP through an SRS resource indication set, realizing indication schemes in different transmission modes through different precoding indications.

In a Physical Uplink Shared Channel (PUSCH) communication method provided by an embodiment of the present disclosure, the maximum number of transmission data layers includes maximum number(s) of transmission layers supported by different panels for the symmetric panel and/or asymmetric panel transmission supported by the terminal.

In an embodiment of the present disclosure, the maximum number of transmission data layers may include a first maximum number of transmission data layers and/or a second maximum number of transmission data layers.

The first maximum number of transmission data layers is a maximum number of data layers that a corresponding panel of the terminal can use when the terminal performs a data transmission in an M-TRP and/or S-TRP transmission state. When the first maximum numbers of transmission data layers corresponding to different SRS resource sets for the symmetric panels and/or asymmetric panels supported by the terminal are the same, the first maximum numbers of transmission data layers may be expressed as maxRank. When the first maximum numbers of transmission data layers corresponding to different SRS resource sets for the symmetric panels and/or asymmetric panels supported by the terminal are different, the first maximum numbers of transmission data layers may be expressed as maxRank1 and maxRank2, respectively. The second maximum number of transmission data layers is a maximum number of data layers that a corresponding panel of the terminal can use when the terminal performs a data transmission in the S-TRP transmission state. When the second maximum numbers of transmission data layers corresponding to different SRS resource sets for the symmetric panels and/or asymmetric panels supported by the terminal are the same, the second maximum numbers of transmission data layers may be expressed as maxRank'. When the second maximum numbers of transmission data layers corresponding to different SRS resource sets for the symmetric panels and/or asymmetric panels supported by the terminal are different, the second maximum numbers of transmission data layers may be expressed as maxRank1' and maxRank2', respectively.

For the convenience of description in the following embodiments of the present disclosure, when the terminal is in the M-TRP and/or S-TRP transmission state, the maximum number of data layers that can be used by a corresponding panel of the terminal when a data transmission is performed is called the first maximum number of transmission data layers. When the terminal is in the S-TRP transmission state, the maximum number of data layers that can be used by a corresponding panel of the terminal when a data transmission is performed is called the second maximum number of transmission data layers.

The maximum number of transmission data layers is the first maximum number of transmission data layers.

The first number of transmission data layers is the maximum number of transmission data layers supported by a corresponding panel for a communication performed by the terminal based on M-TRP, and is the maximum number of transmission data layers supported by a corresponding panel for a communication performed by the terminal based on S-TRP.

In an example, SRS resource sets for different panels in the symmetric panels and/or asymmetric panels supported by the terminal correspond to the same first maximum number of transmission data layers.

The network device may configure different SRS resource sets associated with different TRP sending directions, and a different panel corresponds to an SRS resource set. The SRS resource set may include a first SRS resource set or a second SRS resource set. In an example, an SRI indication field indicates a multi-TRP sending state and corresponds to different TRPs, such as TRP1 and TRP2. Accordingly, a first group of PUSCH transmission occasions are towards a transmission on TRP1 (the first SRS resource set), and a second group of PUSCH transmission occasions are towards a transmission on TRP2 (the second SRS resource set). In the S-TRP transmission mode, a SRS resource set corresponding to a panel may be any one of the first SRS resource set and the second SRS resource set. In the M-TRP transmission mode, the SRS resource set(s) corresponding to a panel may be the first SRS resource set and the second SRS resource set.

For the convenience of description in the following embodiments of the present disclosure, any two different SRS resource sets among multiple SRS resource sets corresponding to panel(s) are referred to as a first SRS resource set and a second SRS resource set.

In an example, when maxRank=4 and maxRank=4 is used for both the first SRS resource set and the second SRS resource set, if the terminal is in the M-TRP transmission state, the first SRS resource set and the second SRS resource set each correspond to 2 data layers, and if the terminal is in the S-TRP transmission state, the first SRS resource set and the second SRS resource set each correspond to 4 data layers. When maxRank' =2, if the terminal is in the S-TRP transmission state, the first SRS resource set and the second SRS resource set each correspond to 2 data layers; in a case where maxRank is used for both the first SRS resource set and the second SRS resource set, if the terminal is in the M-TRP transmission state, the first SRS resource set and the second SRS resource set also each correspond to 2 data layers, and maxRank=4.

Different SRS resource sets for the symmetric panels supported by the terminal correspond to the same first maximum number of transmission data layers.

In an example, in a case where the terminal supports the symmetric panel transmission, the first number of transmission data layers is used for both the first SRS resource set and the second SRS resource set corresponding to panel(s) for the communication performed by the terminal based on M-TRP. Also, the first number of transmission data layers is used for the first SRS resource set or the second SRS resource set corresponding to panel(s) for the communication performed by the terminal based on S-TRP. That is, the first SRS resource set and the second SRS resource set correspond to the same first maximum number of transmission data layers.

Different SRS resource sets for the asymmetric panels supported by the terminal correspond to the same first maximum number of transmission data layers.

In an example, in a case where the terminal supports the asymmetric panel transmission, the first number of transmission data layers is used for both the first SRS resource set and the second SRS resource set corresponding to panel(s) for the communication performed by the terminal based on M-TRP. Also, the first number of transmission data layers is used for the first SRS resource set or the second SRS resource set corresponding to the panel(s) for the communication performed by the terminal based on S-TRP. That is, the first SRS resource set and the second SRS resource set correspond to the same first maximum number of transmission data layers.

In an embodiment of the present disclosure, different SRS resource sets for different panels in the asymmetric panels supported by the terminal correspond to different first maximum numbers of transmission data layers.

Different first maximum numbers of transmission data layers refer to that the maximum numbers of transmission data layers supported by the corresponding panels for the communication performed by the terminal based on M-TRP are different. Different first maximum numbers of transmission data layers are configured independently and are used for the first SRS resource set and the second SRS resource set, respectively.

In an example, when two different first maximum numbers of transmission data layers are independently configured, namely maxRank1 and maxRank2, maxRank1 is used for the first SRS resource set corresponding to the panel(s) for the communication performed by the terminal based on M-TRP, and maxRank2 is used for the second SRS resource set corresponding to the panel(s) for the communication performed by the terminal based on M-TRP.

The maximum number of transmission data layers is the second maximum number of transmission data layers.

The second maximum number of transmission data layers is the maximum number of transmission data layers supported by the corresponding panel(s) for the communication performed by the terminal based on S-TRP.

In a case where the terminal supports the symmetric panel transmission, the first SRS resource set and the second SRS resource set corresponding to panel(s) for the communication performed by the terminal based on M-TRP correspond to the same first maximum number of transmission data layers, and the first SRS resource set or the second SRS resource set corresponding to the panel(s) for the communication performed by the terminal based on S-TRP corresponds to the second maximum number of transmission data layers.

In an example, in a case where the terminal supports the symmetric panel transmission, the first number of transmission data layers is used for both the first SRS resource set and the second SRS resource set corresponding to the panel(s) for the communication performed by the terminal based on M-TRP. And, the second number of transmission data layers is used for the first SRS resource set or the second SRS resource set corresponding to the panel(s) for the communication performed by the terminal based on S-TRP. That is, the first SRS resource set and the second SRS resource set corresponding to the panel(s) for the communication performed by the terminal based on M-TRP correspond to the same first maximum number of transmission data layers, and the first SRS resource set or the second SRS resource set corresponding to the panel(s) for the communication performed by the terminal based on M-TRP corresponds to the second maximum number of transmission data layers. The first maximum number of transmission data layers is different from the second maximum number of transmission data layers.

In a case where the terminal supports the asymmetric panel transmission, the first SRS resource set and the second SRS resource set corresponding to the panel(s) for the communication performed by the terminal based on M-TRP correspond to the same first maximum number of transmission data layers, and the first SRS resource set or the second SRS resource set corresponding to the panel(s) for the communication performed by the terminal based on S-TRP corresponds to the second maximum number of transmission data layers.

In an example, in a case where the terminal supports the asymmetric panel transmission, the first number of transmission data layers is used for both the first SRS resource set and the second SRS resource set corresponding to the panel(s) for the communication performed by the terminal based on M-TRP. And, the second number of transmission data layers is used for the first SRS resource set or the second SRS resource set corresponding to the panel(s) for the communication performed by the terminal based on S-TRP. That is, the first SRS resource set and the second SRS resource set corresponding to the panel(s) for the communication performed by the terminal based on M-TRP correspond to the same first maximum number of transmission data layers, and the first SRS resource set or the second SRS resource set corresponding to the panel(s) for the communication performed by the terminal based on M-TRP corresponds to the second maximum number of transmission data layers. The first maximum number of transmission data layers is different from the second maximum number of transmission data layers.

In a case where the terminal supports the asymmetric panel transmission, the first SRS resource set and the second SRS resource set corresponding to the panel(s) for the communication performed by the terminal based on M-TRP correspond to different first maximum numbers of transmission data layers. For the panel(s) for the communication performed by the terminal based on S-TRP, the first SRS resource set or the second SRS resource set corresponding to the panel(s) corresponds to the same second maximum number of transmission data layers.

In an embodiment of the present disclosure, the same second maximum number of transmission data layers may include maxRank from capability reporting.

In an example, when two different first maximum numbers of transmission data layers are independently configured, they may be maxRank1 and maxRank2 respectively, and maxRank1 and maxRank2 are respectively used for the first SRS resource set and the second SRS resource set corresponding to the panel(s) for the communication performed by the terminal based on M-TRP. For the panel(s) for the communication performed by the terminal based on S-TRP, the first SRS resource set or the second SRS resource set corresponding to the panel(s) corresponds to the maxRank from the capability reporting.

In a Physical Uplink Shared Channel (PUSCH) communication method provided by an embodiment of the present disclosure, different SRS resource sets for different panels in the symmetric panels and/or asymmetric panels supported by the terminal correspond to different second maximum numbers of transmission data layers.

In a case where the terminal supports the symmetric panel transmission and/or the asymmetric panel transmission, the first SRS resource set and the second SRS resource set corresponding to the panel(s) for the communication performed by the terminal based on M-TRP correspond to the same first maximum number of transmission data layers. For the panel(s) for the communication performed by the terminal based on S-TRP, the first SRS resource set or the second SRS resource set corresponding to the panel(s) corresponds to a different second maximum number of transmission data layers.

In an embodiment of the present disclosure, the different second maximum numbers of transmission data layers may include maxRank1' and maxRank2' from capability reporting.

In an example, when the same first maximum number of transmission data layers is independently configured, it may be maxRank. The maxRank is used for both the first SRS resource set and the second SRS resource set corresponding to the panel(s) for the communication performed by the terminal based on M-TRP. The maxRank1' or maxRank2' from the capability reporting is respectively used for the first SRS resource set or the second SRS resource set corresponding to the panel(s) for the communication performed by the terminal based on S-TRP.

In a Physical Uplink Shared Channel (PUSCH) communication method provided by an embodiment of the present disclosure, SRS resource sets for different panels in the asymmetric panels supported by the terminal correspond to different second maximum numbers of transmission data layers.

In a case where the terminal supports the asymmetric panel transmission, the first SRS resource set and the second SRS resource set corresponding to the panel(s) for the communication performed by the terminal based on M-TRP correspond to different first maximum numbers of transmission data layers. For the panel(s) for the communication performed by the terminal based on S-TRP, the first SRS resource set or the second SRS resource set corresponding to the panel(s) corresponds to a different second maximum number of transmission data layers.

In an embodiment of the present disclosure, the different second maximum numbers of transmission data layers may include maxRank1' and maxRank2' from capability reporting.

In an example, when two different first maximum numbers of transmission data layers are independently configured, they may be maxRank1 and maxRank2 respectively, and maxRank1 and maxRank2 are respectively used for the first SRS resource set and the second SRS resource set corresponding to the panel(s) for the communication performed by the terminal based on M-TRP. The maxRank1' or maxRank2' from the capability reporting is respectively used for the first SRS resource set or the second SRS resource set corresponding to the panel(s) for the communication performed by the terminal based on S-TRP.

In a Physical Uplink Shared Channel (PUSCH) communication method provided by an embodiment of the present disclosure, the codebook parameter includes at least one of: a codebook subset, and a full power mode.

In an embodiment of the present disclosure, different panels in the symmetric panels supported by the terminal correspond to the same codebook subset and/or the same full power mode. Alternatively, different panels in the asymmetric panels supported by the terminal correspond to the same codebook subset and/or the same full power mode. Alternatively, different panels in the asymmetric panels supported by the terminal correspond to different codebook subsets and/or different full power modes.

In an example, in a case where the terminal supports the symmetric panel transmission, the first number of transmission data layers is used for both the first SRS resource set and the second SRS resource set corresponding to the panel(s) for the communication performed by the terminal based on M-TRP, and the first number of transmission data layers is used for the first SRS resource set or the second SRS resource set corresponding to the panel(s) for the communication performed by the terminal based on S-TRP. Different panels in the symmetric panels supported by the terminal correspond to the same codebook subset and the same full power mode.

For example, when the terminal supports the symmetric panel transmission and the first number of transmission data layers is used for both the first SRS resource set and the second SRS resource set corresponding to the panel(s) for the communication performed by the terminal based on M-TRP and/or S-TRP, the first maximum number of transmission data layers corresponds to maxRank, and maxRank is used for the first/second SRS resource set corresponding to the panel(s) for the communication performed by the terminal based on S-TRP and/or M-TRP. In this case, different panels in the symmetric panels are configured with the same codebook subset and/or the same full power mode.

In an example, in a case where the terminal supports the symmetric panel transmission, the first number of transmission data layers is used for both the first SRS resource set and the second SRS resource set corresponding to the panel(s) for the communication performed by the terminal based on M-TRP, and the second maximum number of transmission data layers is used for the first SRS resource set or the second SRS resource set corresponding to the panel(s) for the communication performed by the terminal based on S-TRP. Different panels in the symmetric panels supported by the terminal correspond to the same codebook subset and the same full power mode.

For example, the terminal supports the symmetric panel transmission, and the first number of transmission data layers is for both the first SRS resource set and the second SRS resource set corresponding to the panel(s) for the communication performed by the terminal based on M-TRP, and the second maximum number of transmission data layers is used for the first SRS resource set or the second SRS resource set corresponding to the panel(s) for the communication performed by the terminal based on S-TRP. The first maximum number of transmission data layers corresponds to maxRank, and the second maximum number of transmission data layers corresponds to maxRank'. The maxRank is used for the first/second SRS resource set corresponding to the panel(s) for the communication performed by the terminal based on M-TRP, and the maxRank' is used for the first/second SRS resource set corresponding to the panel(s) for the communication performed by the terminal based on S-TRP. In this case, different panels in the symmetric panels are configured with the same codebook subset and/or the same full power mode.

In an example, in a case where the terminal supports the asymmetric panel transmission, the first number of transmission data layers is used for both the first SRS resource set and the second SRS resource set corresponding to the panel(s) for the communication performed by the terminal based on M-TRP, and the first number of transmission data layers is used for the first SRS resource set or the second SRS resource set corresponding to the panel(s) for the communication performed by the terminal based on S-TRP. Different panels in the symmetric panels supported by the terminal correspond to the same codebook subset and the same full power mode, or different panels in the symmetric panels supported by the terminal correspond to the same codebook subset and different full power modes, or different panels in the symmetric panels supported by the terminal correspond to different codebook subsets and different full power modes, or different panels in the symmetric panels supported by the terminal correspond to different codebook subsets and the same full power mode.

For example, when the terminal supports the asymmetric panel transmission and the first number of transmission data layers is used for both the first SRS resource set and the second SRS resource set corresponding to the panel(s) for the communication performed by the terminal based on M-TRP and/or S-TRP, the first maximum number of transmission data layers corresponds to maxRank, and maxRank is used for the first/second SRS resource set corresponding to the panel(s) for the communication performed by the terminal based on S-TRP and/or M-TRP. In this case, different panels in the symmetric panels are configured with the same/different codebook subsets and/or the same/different full power modes.

In an example, in a case where the terminal supports the asymmetric panel transmission, the first number of transmission data layers is used for both the first SRS resource set and the second SRS resource set corresponding to the panel(s) for the communication performed by the terminal based on M-TRP, and the second maximum number of transmission data layers is used for the first SRS resource set or the second SRS resource set corresponding to the panel(s) for the communication performed by the terminal based on S-TRP. Different panels in the symmetric panels supported by the terminal correspond to the same codebook subset and the same full power mode, or different panels in the symmetric panels supported by the terminal correspond to the same codebook subset and different full power modes, or different panels in the symmetric panels supported by the terminal correspond to different codebook subsets and different full power modes, or different panels in the symmetric panels supported by the terminal correspond to different codebook subsets and the same full power mode.

For example, the terminal supports the asymmetric panel transmission, and the first number of transmission data layers is used for both the first SRS resource set and the second SRS resource set corresponding to the panel(s) for the communication performed by the terminal based on M-TRP, and the second maximum number of transmission data layers is used for the first SRS resource set or the second SRS resource set corresponding to the panel(s) for the communication performed by the terminal based on S-TRP. The first maximum number of transmission data layers corresponds to maxRank, and the second maximum number of transmission data layers corresponds to maxRank'. The maxRank is used for both the first/second SRS resource set corresponding to the panel(s) for the communication performed by the terminal based on M-TRP, and the maxRank' is used for the first/second SRS resource set corresponding to the panel(s) for the communication performed by the terminal based on S-TRP. In this case, different panels in the symmetric panels are configured with the same/different codebook subsets, and/or the same/different full power modes.

In an example, in a case where the terminal supports the asymmetric panel transmission, the first number of transmission data layers is used for both the first SRS resource set and the second SRS resource set corresponding to the panel(s) for the communication performed by the terminal based on M-TRP, and a different second maximum number of transmission data layers is used for the first SRS resource set or the second SRS resource set corresponding to the panel(s) for the communication performed by the terminal based on S-TRP. Different panels in the symmetric panels supported by the terminal correspond to the same codebook subset and the same full power mode, or different panels in the symmetric panels supported by the terminal correspond to the same codebook subset and different full power modes, or different panels in the symmetric panels supported by the terminal correspond to different codebook subsets and different full power modes, or different panels in the symmetric panels supported by the terminal correspond to different codebook subsets and the same full power mode.

For example, the terminal supports the asymmetric panel transmission, and the first number of transmission data layers is used for both the first SRS resource set and the second SRS resource set corresponding to the panel(s) for the communication performed by the terminal based on M-TRP, and independently configured different second maximum numbers of transmission data layers are respectively used for the first SRS resource set or the second SRS resource set corresponding to the panel(s) for the communication performed by the terminal based on S-TRP. The first maximum number of transmission data layers corresponds to maxRank, and the second maximum number of transmission data layers corresponds to maxRank1' or maxRank2'. The maxRank is used for both the first/second SRS resource set corresponding to the panel(s) for the communication performed by the terminal based on M-TRP, and the maxRank1'/-maxRank2' is used for the first/second SRS resource set corresponding to the panel(s) for the communication performed by the terminal based on S-TRP. In this case, different panels in the symmetric panels are configured with the same/different codebook subsets, and/or the same/different full power modes.

In an example, in a case where the terminal supports the asymmetric panel transmission, different first maximum numbers of transmission data layers are respectively used for the first SRS resource set and the second SRS resource set corresponding to the panel(s) for the communication performed by the terminal based on M-TRP, and the second maximum number of transmission data layers is used for the first SRS resource set or the second SRS resource set corresponding to the panel(s) for the communication performed by the terminal based on S-TRP. Different panels in the symmetric panels supported by the terminal correspond to the same codebook subset and the same full power mode, or different panels in the symmetric panels supported by the terminal correspond to the same codebook subset and different full power modes, or different panels in the symmetric panels supported by the terminal correspond to different codebook subsets and different full power modes, or different panels in the symmetric panels supported by the terminal correspond to different codebook subsets and the same full power mode.

For example, the terminal supports the asymmetric panel transmission, and independently configured different first numbers of transmission data layers are respectively used for the first SRS resource set and the second SRS resource set corresponding to the panel(s) for the communication performed by the terminal based on M-TRP, and the second maximum number of transmission data layers from the capability reporting is used simultaneously for the first SRS resource set or the second SRS resource set corresponding to the panel(s) for the communication performed by the terminal based on S-TRP. The first maximum number of transmission data layers corresponds to maxRank1 or maxRank2, respectively, and the second maximum number of transmission data layers corresponds to maxRank'. The maxRank1 and maxRank2 are respectively used for the first/second SRS resource set corresponding to the panel(s) for the communication performed by the terminal based on M-TRP, and maxRank' is simultaneously used for the first/second SRS resource set corresponding to the panel(s) for the communication performed by the terminal based on S-TRP. In this case, different panels in the symmetric panels are configured with the same/different codebook subsets, and/or the same/different full power modes.

In an example, in a case where the terminal supports the asymmetric panel transmission, different first maximum numbers of transmission data layers are respectively used for the first SRS resource set and the second SRS resource set corresponding to the panel(s) for the communication performed by the terminal based on M-TRP, and a different second maximum number of transmission data layers is used for the first SRS resource set or the second SRS resource set corresponding to the panel(s) for the communication performed by the terminal based on S-TRP. Different panels in the symmetric panels supported by the terminal correspond to the same codebook subset and the same full power mode, or different panels in the symmetric panels supported by the terminal correspond to the same codebook subset and different full power modes, or different panels in the symmetric panels supported by the terminal correspond to different codebook subsets and different full power modes, or different panels in the symmetric panels supported by the terminal correspond to different codebook subsets and the same full power mode.

For example, the terminal supports the asymmetric panel transmission, and independently configured different first numbers of transmission data layers are respectively used for the first SRS resource set and the second SRS resource set corresponding to the panel(s) for the communication performed by the terminal based on M-TRP, and a different second maximum number of transmission data layers from the capability reporting is respectively used for the first SRS resource set or the second SRS resource set corresponding to the panel(s) for the communication performed by the terminal based on S-TRP. The first maximum number of transmission data layers corresponds to maxRank1 or maxRank2, and the second maximum number of transmission data layers correspond to maxRank1' or maxRank2'. The maxRank1 and maxRank2 are respectively used for the first/second SRS resource set corresponding to the panel(s) for the communication performed by the terminal based on M-TRP, and maxRank1' and maxRank2' are respectively used for the first/second SRS resource set corresponding to the panel(s) for the communication performed by the terminal based on S-TRP. In this case, different panels in the symmetric panels are configured with the same/different codebook subsets, and/or the same/different full power modes.

In a Physical Uplink Shared Channel (PUSCH) communication method provided by an embodiment of the present disclosure, the SRS resource set configuration parameter includes at least one of: the number of SRS resources in an SRS resource set and the number of ports of each SRS resource in the SRS resource set.

The SRS resource set configuration parameter may include any one of: the number of SRS resources in an RS resource set and the number of ports of each SRS resource in the SRS resource set, or may include the number of SRS resources in the RS resource set and the number of ports of each SRS resource in the SRS resource set.

In an embodiment of the present disclosure, in response to the terminal adopting the codebook transmission, the numbers of SRS resources for different SRS resource sets for different panels in the symmetric panels and/or asymmetric panels supported by the terminal are the same, and the numbers of ports for SRS resources are the same. And/or, in response to the terminal adopting the non-codebook transmission, the numbers of SRS resources for different SRS resource sets for different panels in the symmetric panels and/or asymmetric panels supported by the terminal are the same.

The in response to the terminal adopting the codebook transmission, the network device includes the numbers of SRS resources and the numbers of ports for SRS resources in the SRS resource set configuration parameters corresponding to different SRS resource sets for different panels in the asymmetric panels supported by the terminal, and the numbers of SRS resources are the same and the number of ports for SRS resources are also the same.

In an example, in response to the terminal adopting the codebook transmission, for a case of asymmetric panels with 2 antennas + 4 antennas, the number of ports for SRS resources for the two panels can only be configured at the same time according to the panel with a lower panel capability. That is, the number of ports of an SRS resource corresponding to the panel with 4 antennas is configured according to the number of ports of an SRS resource for the panel with 2 antennas, and the numbers of ports are the same, both of which are 2.

In response to the terminal adopting the codebook transmission, the network device includes the numbers of SRS resources and the numbers of ports for SRS resources in the SRS resource set configuration parameters corresponding to different SRS resource sets for different panels in the symmetric panels supported by the terminal, and the numbers of SRS resources are the same and the numbers of ports for SRS resources are also the same.

In a Physical Uplink Shared Channel (PUSCH) communication method provided by an embodiment of the present disclosure, the terminal adopts the codebook transmission, and the number of ports for SRS resources in different SRS resource sets for different panels in the symmetric panels supported by the terminal is the first maximum number of transmission data layers.

In an example, in response to the terminal adopting the codebook transmission, the numbers of SRS resources for different SRS resource sets for different panels in the symmetric panels supported by the terminal are the same, and the numbers of ports for SRS resources are also the same. When the first maximum number of transmission data layers is configured for both the first SRS resource set and the second SRS resource set corresponding to the panel(s) for the communication performed by the terminal based on M-TRP and for the first SRS resource set or the second SRS resource set corresponding to the panel(s) for the communication performed by the terminal based on S-TRP, the number of ports of an SRS resource is configured as the first maximum number of transmission data layers in this case.

For example, in response to the terminal adopting the codebook transmission, the terminal supports the symmetric panel transmission, and when the first number of transmission data layers is configured for both the first SRS resource set and the second SRS resource set corresponding to the panel(s) for the communication performed by the terminal based on M-TRP and/or S-TRP, the first maximum number of transmission data layers corresponds to maxRank, and the number of ports of an SRS resource is configured as maxRank.

In a Physical Uplink Shared Channel (PUSCH) communication method provided by an embodiment of the present disclosure, the terminal adopts the codebook transmission, and the number of ports for SRS resources for different SRS resource sets for different panels in the symmetric panels supported by the terminal is the first maximum number of transmission data layers and/or the second maximum number of transmission layers.

In an example, in response to the terminal adopting the codebook transmission, the numbers of SRS resources for different SRS resource sets for different panels in the symmetric panels supported by the terminal are the same, and the numbers of ports for SRS resources are also the same. When the first maximum number of transmission data layers is configured for both the first SRS resource set and the second SRS resource set corresponding to the panel(s) for the communication performed by the terminal based on M-TRP, and the second maximum number of transmission data layers is configured for the first SRS resource set or the second SRS resource set corresponding to the panel(s) for the communication performed by the terminal based on S-TRP, the number of ports of an SRS resource is configured as the first maximum number of transmission data layers and/or the second maximum number of transmission data layers in this case. For example, the number of ports for all SRS resources in different SRS resource sets may be configured as the first maximum number of transmission data layers. Alternatively, the number of ports for all SRS resources in different SRS resource sets may be configured as the second maximum number of transmission data layers. Alternatively, different SRS resource sets include both the number of ports for SRS resources configured as the first maximum number of transmission data layers and the number of ports for SRS resources configured as the second maximum number of transmission data layers.

For example, in response to the terminal adopting the codebook transmission, the terminal supports the symmetric panel transmission, and the first number of transmission data layers is configured for both the first SRS resource set and the second SRS resource set corresponding to the panel(s) for the communication performed by the terminal based on M-TRP, and the second maximum number of transmission data layers is configured for the first SRS resource set or the second SRS resource set corresponding to the panel(s) for the communication performed by the terminal based on S-TRP. The first maximum number of transmission data layers corresponds to maxRank, and the second maximum number of transmission data layers corresponds to maxRank'. In this case, the number of ports of an SRS resource is configured as maxRank and/or maxRank'.

Different SRS resource sets include both the number of ports for an SRS resource which is configured as the first maximum number of transmission data layers and the number of ports for an SRS resource which is configured as the second maximum number of transmission data layers. For example, in a case of symmetrical panels of 4 antennas + 4 antennas, if the first maximum number of transmission data layers is 2 and the second maximum number of transmission data layers is 4, an SRS resource set includes one or more SRS resources with a port number of 4 and one or more SRS resources with a port number of 2. In this case, in actual applications, the terminal autonomously selects corresponding SRS resource(s) for transmission according to the M-TRP transmission or the S-TRP transmission.

In a Physical Uplink Shared Channel (PUSCH) communication method provided by an embodiment of the present disclosure, the terminal adopts the codebook transmission, the full power mode of the terminal is configured as a full power mode 2, and the maximum number of SRS resources in an SRS resource set for different panels in the symmetrical panels supported by the terminal is 4.

In response to the full power mode of the terminal not being configured as the full power mode 2, the network device configures the maximum number of SRS resources for SRS resource sets for different panels in the symmetric panels supported by the terminal as 2. Alternatively, in response to the full power mode of the terminal not being configured as the full power mode 2, the network device configures the maximum number of SRS resources for different SRS resource sets for different panels in the symmetric panels supported by the terminal as the first maximum number of transmission data layers or the second maximum number of transmission layers.

In an example, in response to the terminal adopting the codebook transmission, when the first maximum number of transmission data layers is configured for both the first SRS resource set and the second SRS resource set corresponding to the panel(s) for the communication performed by the terminal based on M-TRP and is configured for the first SRS resource set or the second SRS resource set corresponding to the panel(s) for communication performed by the terminal based on S-TRP, if the full power mode of the terminal is configured as the full power mode 2, the SRS resource sets for different panels in the symmetrical panels supported by the terminal have a maximum number of SRS resources of 4. If the full power mode of the terminal is not configured as the full power mode 2, the SRS resource sets for different panels in the symmetrical panels supported by the terminal has a maximum number of SRS resources of 2.

In an example, in response to the terminal adopting the codebook transmission, when the first maximum number of transmission data layers is configured for both the first SRS resource set and the second SRS resource set corresponding to panel(s) for the communication performed by the terminal based on M-TRP, and the second maximum number of transmission data layers is configured for the first SRS resource set or the second SRS resource set corresponding to the panel(s) for the communication performed by the terminal based on S-TRP, if the full power mode of the terminal is configured as the full power mode 2, the SRS resource sets for different panels in the symmetrical panels supported by the terminal have a maximum number of SRS resources of 4. If the full power mode of the terminal is not configured as the full power mode 2, the maximum number of SRS resources for different SRS resource sets for different panels in the symmetrical panels supported by the terminal may be the first maximum number of transmission data layers, or may be the second maximum number of transmission layers, and the first maximum number of transmission data layers or the second maximum number of transmission layers may be greater than 2.

In response to the terminal adopting the non-codebook transmission, the network device includes the number of SRS resources in the SRS resource set configuration parameters corresponding to different SRS resource sets for different panels in the symmetric panels supported by the terminal, and the number of SRS resources is the same.

In a Physical Uplink Shared Channel (PUSCH) communication method provided by an embodiment of the present disclosure, the terminal adopts the non-codebook transmission, and the number of SRS resources for different SRS resource sets for different panels in the symmetric panels supported by the terminal is the first maximum number of transmission data layers.

In an example, in response to the terminal adopting the non-codebook transmission, the number of SRS resources for different SRS resource sets for different panels in the symmetric panels supported by the terminal is the same. When the first maximum number of transmission data layers is configured for both the first SRS resource set and the second SRS resource set corresponding to the panel(s) for the communication performed by the terminal based on M-TRP, and is configured for the first SRS resource set or the second SRS resource set corresponding to the panel(s) for the communication performed by the terminal based on S-TRP, the number of SRS resources is configured as the first maximum number of transmission data layers in this case.

For example, in response to the terminal adopting the non-codebook transmission, the terminal supports the symmetric panel transmission, and the first number of transmission data layers is configured for both the first SRS resource set and the second SRS resource set corresponding to the panel(s) for the communication performed by the terminal based on M-TRP and/or S-TRP, the first maximum number of transmission data layers corresponds to maxRank, and the number of ports of an SRS resource is configured as maxRank in this case.

In a Physical Uplink Shared Channel (PUSCH) communication method provided by an embodiment of the present disclosure, the terminal adopts the non-codebook transmission, and the number of SRS resources for different SRS resource sets for different panels in the symmetric panels supported by the terminal is the first maximum number of transmission data layers or the second maximum number of transmission layers.

In an example, in response to the terminal adopting the non-codebook transmission, the numbers of SRS resources for different SRS resource sets for different panels in the symmetric panels supported by the terminal are the same. When the first maximum number of transmission data layers is configured for both the first SRS resource set and the second SRS resource set corresponding to the panel(s) for the communication performed by the terminal based on M-TRP, and the second maximum number of transmission data layers is configured for the first SRS resource set or the second SRS resource set corresponding to the panel(s) for the communication performed by the terminal based on S-TRP, the number of SRS resources is configured as the first maximum number of transmission data layers and/or the second maximum number of transmission data layers in this case. For example, all the numbers of SRS resources for different SRS resource sets may be configured as the first maximum number of transmission data layers. Alternatively, all the number of SRS resources for different SRS resource sets may be configured as the second maximum number of transmission data layers.

For example, in response to the terminal adopting the non-codebook transmission, the terminal supports the symmetric panel transmission, and the first number of transmission data layers is configured for both the first SRS resource set and the second SRS resource set corresponding to the panel(s) for the communication performed by the terminal based on M-TRP, and the second maximum number of transmission data layers is configured for the first SRS resource set or the second SRS resource set corresponding to the panel(s) for the communication performed by the terminal based on S-TRP. The first maximum number of transmission data layers corresponds to maxRank, and the second maximum number of transmission data layers corresponds to maxRank'. In this case, the number of ports of an SRS resource is configured as maxRank and/or maxRank'.

In response to the terminal adopting the codebook transmission, the network device includes the numbers of SRS resources and the numbers of ports for SRS resources in the SRS resource set configuration parameters corresponding to different SRS resource sets for different panels in the asymmetric panels supported by the terminal.

In a Physical Uplink Shared Channel (PUSCH) communication method provided by an embodiment of the present disclosure, the terminal adopts the codebook transmission, different panels in the asymmetric panels supported by the terminal adopt different full power configuration modes, different SRS resource sets corresponding to different full power configuration modes have different numbers of SRS resources, and different numbers of ports for SRS resources.

In an example, when the first maximum number of transmission data layers is configured for both the first SRS resource set and the second SRS resource set corresponding to the panel(s) for the communication performed by the terminal based on M-TRP, and the second maximum number of transmission data layers is configured for the first SRS resource set or the second SRS resource set corresponding to the panel(s) for the communication performed by the terminal based on S-TRP, if different panels in the asymmetric panels supported by the terminal use different full power configuration modes in this case, the numbers of SRS resources for the SRS resource sets corresponding to different panels are different, and the numbers of ports for SRS resources are different.

For example, in response to the terminal adopting the codebook transmission, the terminal supports the asymmetric panel transmission, and the first number of transmission data layers is configured for both the first SRS resource set and the second SRS resource set corresponding to the panel(s) for the communication performed by the terminal based on M-TRP, and the second maximum number of transmission data layers is configured for the first SRS resource set or the second SRS resource set corresponding to the panel(s) for the communication performed by the terminal based on S-TRP. The first maximum number of transmission data layers corresponds to maxRank, and the second maximum number of transmission data layers corresponds to maxRank'. In this case, considering that different panels in the asymmetric panels supported by the terminal adopt different full power configuration modes, the numbers of SRS resources for the SRS resource sets corresponding to different panels are different, and the numbers of ports for SRS resources are different.

In a Physical Uplink Shared Channel (PUSCH) communication method provided by an embodiment of the present disclosure, the terminal adopts the codebook transmission, and different SRS resource sets for different panels in the asymmetric panel supported by the terminal have the same number of SRS resources, and different numbers of ports for SRS resources. And/or, in response to the terminal adopting the non-codebook transmission, different SRS resource sets for different panels in the asymmetric panels supported by the terminal have the same number of SRS resources.

In an example, when different first maximum numbers of transmission data layers are configured respectively for the first SRS resource set and the second SRS resource set corresponding to the panel(s) for the communication performed by the terminal based on M-TRP, and the second maximum number of transmission data layers obtained from capability reporting is used for the first SRS resource set or the second SRS resource set corresponding to the panel(s) for the communication performed by the terminal based on S-TRP, in response to the terminal adopting the codebook transmission, the network device configures the same number of SRS resources for different SRS resource sets for different panels in the asymmetric panels supported by the terminal the same and different numbers of ports for SRS resources in this case. Alternatively, in response to the terminal adopting the non-codebook transmission, the network device configures the same number of SRS resources for different SRS resource sets for different panels in the asymmetric panels supported by the terminal in this case. Alternatively, in response to the terminal adopting the codebook transmission, the network device configures the same number of SRS resources for different SRS resource sets for different panels in the asymmetric panels supported by the terminal and different numbers of ports for SRS resources in this case. And, in response to the terminal adopting the non-codebook transmission, the network device configures the same number of SRS resources for different SRS resource sets for different panels in the asymmetric panels supported by the terminal in this case.

For example, the terminal supports the asymmetric panel transmission, and independently configured different first numbers of transmission data layers are respectively used for the first SRS resource set and the second SRS resource set corresponding to the panel(s) for the communication performed by the terminal based on M-TRP, and the second maximum number of transmission data layers from the capability reporting is simultaneously used for the first SRS resource set or the second SRS resource set corresponding to the panel(s) for the communication performed by the terminal based on S-TRP. The first maximum numbers of transmission data layer corresponds to maxRank1 or maxRank2 respectively, and the second maximum number of transmission data layers corresponds to maxRank'. The maxRank1 and maxRank2 are respectively used for the first/second SRS resource set corresponding to the panel(s) for the communication performed by the terminal based on M-TRP, and the maxRank' is simultaneously used for the first/second SRS resource set corresponding to the panel(s) for the communication performed by the terminal based on S-TRP. In response to the terminal adopting the codebook transmission, the numbers of SRS resources for different SRS resource sets for different panels in the asymmetric panels supported by the terminal are the same, and the numbers of ports for SRS resources are different. And/or, in response to the terminal adopting the non-codebook transmission, the numbers of SRS resources for different SRS resource sets for different panels in the asymmetric panels supported by the terminal are the same.

In a Physical Uplink Shared Channel (PUSCH) communication method provided by an embodiment of the present disclosure, the terminal adopts the codebook transmission, and different SRS resource sets for different panels in the asymmetric panels supported by the terminal have different numbers of SRS resources, and different numbers of ports for SRS resources. And/or, in response to the terminal adopting the non-codebook transmission, different SRS resource sets for different panels in the asymmetric panels supported by the terminal have different numbers of SRS resources.

In an example, when different first maximum numbers of transmission data layers are configured respectively for the first SRS resource set and the second SRS resource set corresponding to the panel(s) for the communication performed by the terminal based on M-TRP, and different second maximum numbers of transmission data layers obtained from capability reporting are respectively used for the first SRS resource set or the second SRS resource set corresponding to the panel(s) for the communication performed by the terminal based on S-TRP, in response to the terminal adopting the codebook transmission, the network device configures different numbers of SRS resources for different SRS resource sets for different panels in the asymmetric panels supported by the terminal and different numbers of ports for SRS resources in this case. Alternatively, in response to the terminal adopting the non-codebook transmission, the network device configures different numbers of SRS resources for different SRS resource sets for different panels in the asymmetric panels supported by the terminal in this case. Alternatively, in response to the terminal adopting the codebook transmission, the network device configures different numbers of SRS resources for different SRS resource sets for different panels in the asymmetric panels supported by the terminal and different numbers of ports for SRS resources in this case, and also in response to the terminal adopting the non-codebook transmission, the network device configures different numbers of SRS resources for different SRS resource sets for different panels in the asymmetric panels supported by the terminal in this case.

For example, the terminal supports the asymmetric panel transmission, and independently configured different first numbers of transmission data layers are respectively used for the first SRS resource set and the second SRS resource set corresponding to the panel(s) for the communication performed by the terminal based on M-TRP, and different second maximum numbers of transmission data layers obtained from capability reporting are respectively used for the first SRS resource set or the second SRS resource set corresponding to the panel(s) for the communication performed by the terminal based on S-TRP, the first maximum number of transmission data layers corresponds to maxRank1 or maxRank2, and the second maximum number of transmission data layers corresponds to maxRank1' or maxRank2'. The maxRank1 and maxRank2 are respectively used for the first/second SRS resource set corresponding to the panel(s) for the communication performed by the terminal based on M-TRP, and the maxRank1' and maxRank2' are respectively used for the first/second SRS resource set corresponding to the panel(s) for the communication performed by the terminal based on S-TRP. In response to the terminal adopting the codebook transmission, the numbers of SRS resources for different SRS resource sets for different panels in the asymmetric panels supported by the terminal are different, and the numbers of ports for SRS resources are different in this case. Alternatively, in response to the terminal adopting the non-codebook transmission, the network device configures different numbers of SRS resources for different SRS resource sets for different panels in the asymmetric panels supported by the terminal in this case. Alternatively, in response to the terminal adopting the codebook transmission, the network device configures different numbers of SRS resources for different SRS resource sets for different panels in the asymmetric panels supported by the terminal and different numbers of ports for SRS resources in this case, and also in response to the terminal adopting the non-codebook transmission, the network device configures different numbers of SRS resources for different SRS resource sets for different panels in the asymmetric panels supported by the terminal in this case.

In a Physical Uplink Shared Channel (PUSCH) communication method provided by an embodiment of the present disclosure, the number of SRS resources and/or the number of ports of an SRS resource for different SRS resource sets for different panels in the asymmetric panels supported by the terminal are determined based on the first maximum number of transmission data layers or the second maximum number of transmission layers.

In an example, in response to the terminal adopting the codebook transmission, the network device determines the number of SRS resources and/or the number of ports for SRS resources for different SRS resource sets for different panels in the asymmetric panels supported by the terminal based on the first maximum number of transmission data layers or the second maximum number of transmission layers.

In an example, in response to the terminal adopting the non-codebook transmission, the network device determines the number of SRS resources for different SRS resource sets for different panels in the asymmetric panels supported by the terminal based on the first maximum number of transmission data layers or the second maximum number of transmission layers.

In all the Physical Uplink Shared Channel (PUSCH) communication methods involved in the present disclosure, the S-DCI or M-DCI scheduling based PUSCH transmission mode using the STxMP transmission supported by the terminal is an SDM transmission mode.

That is, the above-mentioned Physical Uplink Shared Channel (PUSCH) communication methods are all applicable to the case where the PUSCH transmission mode using the STxMP transmission scheduled by S-DCI or M-DCI is the SDM transmission mode.

In a part of Physical Uplink Shared Channel (PUSCH) communication methods involved in the present disclosure, the S-DCI or M-DCI scheduling based PUSCH transmission mode using the STxMP transmission supported by the terminal is an SFN transmission mode.

That is, the above-mentioned Physical Uplink Shared Channel (PUSCH) communication methods are partially applicable to the case where the PUSCH transmission mode using the STxMP transmission scheduled by S-DCI or M-DCI is the SFN transmission mode.

In the embodiments of the present disclosure, the network device determines that the terminal supports the uplink STxMP transmission, and further configures the PUSCH transmission resource configuration parameter. The maximum number of transmission layers, the codebook parameter and the SRS resource set for the terminal in the PUSCH transmission are configured separately based on different transmission situations. Thus, on the basis of ensuring the flexibility of the terminal, the embodiments of the present disclosure can enable the PUSCH transmission to support a higher transmission rate and throughput.

FIG. 5 is a flowchart of a Physical Uplink Shared Channel (PUSCH) communication method according to an example embodiment. As shown in FIG. 5, the Physical Uplink Shared Channel (PUSCH) communication method is applied in a terminal and includes the following step.

In step S21, it is determined that the terminal supports uplink simultaneous transmission via multiple antenna panels STxMP transmission, and a PUSCH transmission resource configuration parameter is configured.

The PUSCH transmission resource configuration parameter corresponds to the terminal supporting a symmetric panel transmission and/or an asymmetric panel transmission, and the PUSCH transmission resource configuration parameter includes at least one of: a maximum number of transmission data layers, a codebook parameter, and an SRS resource set configuration parameter.

The SRS resource set configuration is applied to a codebook based transmission and/or a non-codebook based transmission.

In the Physical Uplink Shared Channel (PUSCH) communication method provided by an embodiment of the present disclosure, a group of symmetric panels or a group of asymmetric panels correspond to a group of PUSCH transmission resource configuration parameters.

A group of PUSCH transmission resource configuration parameters may include one or more of: the maximum number of transmission data layers, the codebook parameter, and the SRS resource set configuration parameter. For example, a group of PUSCH transmission resource configuration parameters may include the maximum number of transmission data layers, the codebook parameter, and the SRS resource set configuration parameter. Alternatively, a group of PUSCH transmission resource configuration parameters may include pairwise combinations of the maximum number of transmission data layers, the codebook parameter, and the SRS resource set configuration parameter. For example, a group of PUSCH transmission resource configuration parameters may include the maximum number of transmission data layers and the codebook parameter, or may include the maximum number of transmission data layers and the SRS resource set configuration parameter, or may include the codebook parameter and the SRS resource set configuration parameter. Alternatively, a group of PUSCH transmission resource configuration parameters may include one of the maximum number of transmission data layers, the codebook parameter, and the SRS resource set configuration parameter. For example, a group of PUSCH transmission resource configuration parameters may include the maximum number of transmission data layers, or the codebook parameter, or the SRS resource set configuration parameter.

The terminal is generally configured with multiple physical panels, and the capabilities of different panels may be the same or different. For example, panels with different panel capabilities have different numbers of SRS ports, and/or support different maximum numbers of transmission data layers, and/or correspond to different transmit powers, etc.

The network device determines whether the terminal is currently suitable for uplink simultaneous transmission via multiple panels. If the terminal is currently suitable for uplink simultaneous transmission via multiple panels and is scheduled at the same time, the network device directly or indirectly indicates the relevant transmission. The relevant transmission includes specific beam indication information for the terminal, the number of transmission data layers used for the transmission, and the allocation of Demodulation Reference Signal (DMRS) port(s) to be used, and precoding indication information, etc.

In an example, the symmetric panel transmission refers to a transmission based on a group of panels with the same panel capability(capabilities) among multiple panels of a terminal. The symmetric panels may be two panels with the same number of SRS ports, the same maximum number of data transmission layers, and the same transmit power.

In an example, the asymmetric panel transmission refers to a transmission based on a group of panels with different panel capabilities among multiple panels of a terminal. The asymmetric panels may be two panels with different numbers of SRS ports, and/or different maximum numbers of data transmission layers, and/or different transmit powers.

In an embodiment of the present disclosure, when the network device determines that the terminal supports uplink simultaneous transmission via multiple panels, the network device configures the PUSCH transmission resource configuration parameter(s) respectively corresponding to the symmetric panel(s) and/or asymmetric panel(s) of the terminal, so that the network device indicates the terminal to dynamically switch between M-TRP and S-TRP through an SRS resource indication set, thereby realizing indication schemes in different transmission modes through different precoding indications.

In a Physical Uplink Shared Channel (PUSCH) communication method provided by an embodiment of the present disclosure, the maximum number of transmission data layers includes maximum number(s) of transmission layers supported by different panels for the symmetric panel and/or asymmetric panel transmission supported by the terminal.

In an embodiment of the present disclosure, the maximum number of transmission data layers may include a first maximum number of transmission data layers and/or a second maximum number of transmission data layers.

The first maximum number of transmission data layers is a maximum number of data layers that a corresponding panel of the terminal can use when the terminal performs a data transmission in an M-TRP and/or S-TRP transmission state. When the first maximum numbers of transmission data layers corresponding to different SRS resource sets for the symmetric panels and/or asymmetric panels supported by the terminal are the same, the first maximum numbers of transmission data layers may be expressed as maxRank. When the first maximum numbers of transmission data layers corresponding to different SRS resource sets for the symmetric panels and/or asymmetric panels supported by the terminal are different, the first maximum numbers of transmission data layers may be expressed as maxRank1 and maxRank2, respectively. The second maximum number of transmission data layers is a maximum number of data layers that a corresponding panel of the terminal can use when the terminal performs a data transmission in the S-TRP transmission state. When the second maximum numbers of transmission data layers corresponding to different SRS resource sets for the symmetric panels and/or asymmetric panels supported by the terminal are the same, the second maximum numbers of transmission data layers may be expressed as maxRank'. When the second maximum numbers of transmission data layers corresponding to different SRS resource sets for the symmetric panels and/or asymmetric panels supported by the terminal are different, the second maximum numbers of transmission data layers may be expressed as maxRank1' and maxRank2', respectively.

For the convenience of description in the following embodiments of the present disclosure, when the terminal is in the M-TRP and/or S-TRP transmission state, the maximum number of data layers that can be used by a corresponding panel of the terminal when a data transmission is performed is called the first maximum number of transmission data layers. When the terminal is in the S-TRP transmission state, the maximum number of data layers that can be used by a corresponding panel of the terminal when a data transmission is performed is called the second maximum number of transmission data layers.

The maximum number of transmission data layers is the first maximum number of transmission data layers.

The first number of transmission data layers is the maximum number of transmission data layers supported by a corresponding panel for a communication performed by the terminal based on M-TRP, and is the maximum number of transmission data layers supported by a corresponding panel for a communication performed by the terminal based on S-TRP.

In an example, SRS resource sets for different panels in the symmetric panels and/or asymmetric panels supported by the terminal correspond to the same first maximum number of transmission data layers.

The network device may configure different SRS resource sets associated with different TRP sending directions, and a different panel corresponds to one SRS resource set. The SRS resource set may include a first SRS resource set or a second SRS resource set. In an example, an SRI indication field indicates a multi-TRP sending state and corresponds to different TRPs, such as TRP1 and TRP2. Accordingly, a first group of PUSCH transmission occasions are towards a transmission on TRP1 (the first SRS resource set), and a second group of PUSCH transmission occasions are towards a transmission on TRP2 (the second SRS resource set). In the S-TRP transmission mode, a SRS resource set corresponding to a panel may be any one of the first SRS resource set and the second SRS resource set. In the M-TRP transmission mode, the SRS resource set(s) corresponding to a panel may be the first SRS resource set and the second SRS resource set.

For the convenience of description in the following embodiments of the present disclosure, any two different SRS resource sets among multiple SRS resource sets corresponding to panel(s) are referred to as a first SRS resource set and a second SRS resource set.

In an example, when maxRank=4 and maxRank=4 is used for both the first SRS resource set and the second SRS resource set, if the terminal is in the M-TRP transmission state, the first SRS resource set and the second SRS resource set each correspond to 2 data layers, and if the terminal is in the S-TRP transmission state, the first SRS resource set and the second SRS resource set each correspond to 4 data layers. When maxRank' =2, if the terminal is in the S-TRP transmission state, the first SRS resource set and the second SRS resource set each correspond to 2 data layers; in a case where maxRank is used for both the first SRS resource set and the second SRS resource set, if the terminal is in the M-TRP transmission state, the first SRS resource set and the second SRS resource set also each correspond to 2 data layers, and maxRank=4.

Different SRS resource sets for the symmetric panels supported by the terminal correspond to the same first maximum number of transmission data layers.

In an example, in a case where the terminal supports the symmetric panel transmission, the first number of transmission data layers is used for both the first SRS resource set and the second SRS resource set corresponding to panel(s) for the communication performed by the terminal based on M-TRP. Also, the first number of transmission data layers is used for the first SRS resource set or the second SRS resource set corresponding to panel(s) for the communication performed by the terminal based on S-TRP. That is, the first SRS resource set and the second SRS resource set correspond to the same first maximum number of transmission data layers.

Different SRS resource sets for the asymmetric panels supported by the terminal correspond to the same first maximum number of transmission data layers.

In an example, in a case where the terminal supports the asymmetric panel transmission, the first number of transmission data layers is used for both the first SRS resource set and the second SRS resource set corresponding to panel(s) for the communication performed by the terminal based on M-TRP. Also, the first number of transmission data layers is used for the first SRS resource set or the second SRS resource set corresponding to the panel(s) for the communication performed by the terminal based on S-TRP. That is, the first SRS resource set and the second SRS resource set correspond to the same first maximum number of transmission data layers.

In an embodiment of the present disclosure, different SRS resource sets for different panels in the asymmetric panels supported by the terminal correspond to different first maximum numbers of transmission data layers.

Different first maximum numbers of transmission data layers refer to that the maximum numbers of transmission data layers supported by the corresponding panels for the communication performed by the terminal based on M-TRP are different. Different first maximum numbers of transmission data layers are configured independently and are used for the first SRS resource set and the second SRS resource set, respectively.

In an example, when two different first maximum numbers of transmission data layers are independently configured, namely maxRank1 and maxRank2, maxRank1 is used for the first SRS resource set corresponding to the panel(s) for the communication performed by the terminal based on M-TRP, and maxRank2 is used for the second SRS resource set corresponding to the panel(s) for the communication performed by the terminal based on M-TRP.

The maximum number of transmission data layers is the second maximum number of transmission data layers.

The second maximum number of transmission data layers is the maximum number of transmission data layers supported by the corresponding panel(s) for the communication performed by the terminal based on S-TRP.

In a case where the terminal supports the symmetric panel transmission, the first SRS resource set and the second SRS resource set corresponding to panel(s) for the communication performed by the terminal based on M-TRP correspond to the same first maximum number of transmission data layers, and the first SRS resource set or the second SRS resource set corresponding to the panel(s) for the communication performed by the terminal based on S-TRP corresponds to the second maximum number of transmission data layers.

In an example, in a case where the terminal supports the symmetric panel transmission, the first number of transmission data layers is used for both the first SRS resource set and the second SRS resource set corresponding to the panel(s) for the communication performed by the terminal based on M-TRP. And, the second number of transmission data layers is used for the first SRS resource set or the second SRS resource set corresponding to the panel(s) for the communication performed by the terminal based on S-TRP. That is, the first SRS resource set and the second SRS resource set corresponding to the panel(s) for the communication performed by the terminal based on M-TRP correspond to the same first maximum number of transmission data layers, and the first SRS resource set or the second SRS resource set corresponding to the panel(s) for the communication performed by the terminal based on M-TRP corresponds to the second maximum number of transmission data layers. The first maximum number of transmission data layers is different from the second maximum number of transmission data layers.

In a case where the terminal supports the asymmetric panel transmission, the first SRS resource set and the second SRS resource set corresponding to the panel(s) for the communication performed by the terminal based on M-TRP correspond to the same first maximum number of transmission data layers, and the first SRS resource set or the second SRS resource set corresponding to the panel(s) for the communication performed by the terminal based on S-TRP corresponds to the second maximum number of transmission data layers.

In an example, in a case where the terminal supports the asymmetric panel transmission, the first number of transmission data layers is used for both the first SRS resource set and the second SRS resource set corresponding to the panel(s) for the communication performed by the terminal based on M-TRP. And, the second number of transmission data layers is used for the first SRS resource set or the second SRS resource set corresponding to the panel(s) for the communication performed by the terminal based on S-TRP. That is, the first SRS resource set and the second SRS resource set corresponding to the panel(s) for the communication performed by the terminal based on M-TRP correspond to the same first maximum number of transmission data layers, and the first SRS resource set or the second SRS resource set corresponding to the panel(s) for the communication performed by the terminal based on M-TRP corresponds to the second maximum number of transmission data layers. The first maximum number of transmission data layers is different from the second maximum number of transmission data layers.

In a case where the terminal supports the asymmetric panel transmission, the first SRS resource set and the second SRS resource set corresponding to the panel(s) for the communication performed by the terminal based on M-TRP correspond to different first maximum numbers of transmission data layers. For the panel(s) for the communication performed by the terminal based on S-TRP, the first SRS resource set or the second SRS resource set corresponding to the panel(s) corresponds to the same second maximum number of transmission data layers.

In an embodiment of the present disclosure, the same second maximum number of transmission data layers may include maxRank from capability reporting.

In an example, when two different first maximum numbers of transmission data layers are independently configured, they may be maxRank1 and maxRank2 respectively, and maxRank1 and maxRank2 are respectively used for the first SRS resource set and the second SRS resource set corresponding to the panel(s) for the communication performed by the terminal based on M-TRP. For the panel(s) for the communication performed by the terminal based on S-TRP, the first SRS resource set or the second SRS resource set corresponding to the panel(s) corresponds to the maxRank from the capability reporting.

In a Physical Uplink Shared Channel (PUSCH) communication method provided by an embodiment of the present disclosure, different SRS resource sets for different panels in the symmetric panels and/or asymmetric panels supported by the terminal correspond to different second maximum numbers of transmission data layers.

In a case where the terminal supports the symmetric panel transmission and/or the asymmetric panel transmission, the first SRS resource set and the second SRS resource set corresponding to the panel(s) for the communication performed by the terminal based on M-TRP correspond to the same first maximum number of transmission data layers. For the panel(s) for the communication performed by the terminal based on S-TRP, the first SRS resource set or the second SRS resource set corresponding to the panel(s) corresponds to a different second maximum number of transmission data layers.

In an embodiment of the present disclosure, the different second maximum numbers of transmission data layers may include maxRank1' and maxRank2' from capability reporting.

In an example, when the same first maximum number of transmission data layers is independently configured, it may be maxRank. The maxRank is used for both the first SRS resource set and the second SRS resource set corresponding to the panel(s) for the communication performed by the terminal based on M-TRP. The maxRank1' or maxRank2' from the capability reporting is respectively used for the first SRS resource set or the second SRS resource set corresponding to the panel(s) for the communication performed by the terminal based on S-TRP.

In a Physical Uplink Shared Channel (PUSCH) communication method provided by an embodiment of the present disclosure, SRS resource sets for different panels in the asymmetric panels supported by the terminal correspond to different second maximum numbers of transmission data layers.

In a case where the terminal supports the asymmetric panel transmission, the first SRS resource set and the second SRS resource set corresponding to the panel(s) for the communication performed by the terminal based on M-TRP correspond to different first maximum numbers of transmission data layers. For the panel(s) for the communication performed by the terminal based on S-TRP, the first SRS resource set or the second SRS resource set corresponding to the panel(s) corresponds to a different second maximum number of transmission data layers.

In an embodiment of the present disclosure, the different second maximum numbers of transmission data layers may include maxRank1' and maxRank2' from capability reporting.

In an example, when two different first maximum numbers of transmission data layers are independently configured, they may be maxRank1 and maxRank2 respectively, and maxRank1 and maxRank2 are respectively used for the first SRS resource set and the second SRS resource set corresponding to the panel(s) for the communication performed by the terminal based on M-TRP. The maxRank1' or maxRank2' from the capability reporting is respectively used for the first SRS resource set or the second SRS resource set corresponding to the panel(s) for the communication performed by the terminal based on S-TRP.

In a Physical Uplink Shared Channel (PUSCH) communication method provided by an embodiment of the present disclosure, the codebook parameter includes at least one of: a codebook subset, and a full power mode.

In an embodiment of the present disclosure, different panels in the symmetric panels supported by the terminal correspond to the same codebook subset and/or the same full power mode. Alternatively, different panels in the asymmetric panels supported by the terminal correspond to the same codebook subset and/or the same full power mode. Alternatively, different panels in the asymmetric panels supported by the terminal correspond to different codebook subsets and/or different full power modes.

In an example, in a case where the terminal supports the symmetric panel transmission, the first number of transmission data layers is used for both the first SRS resource set and the second SRS resource set corresponding to the panel(s) for the communication performed by the terminal based on M-TRP, and the first number of transmission data layers is used for the first SRS resource set or the second SRS resource set corresponding to the panel(s) for the communication performed by the terminal based on S-TRP. Different panels in the symmetric panels supported by the terminal correspond to the same codebook subset and the same full power mode.

For example, when the terminal supports the symmetric panel transmission and the first number of transmission data layers is used for both the first SRS resource set and the second SRS resource set corresponding to the panel(s) for the communication performed by the terminal based on M-TRP and/or S-TRP, the first maximum number of transmission data layers corresponds to maxRank, and maxRank is used for the first/second SRS resource set corresponding to the panel(s) for the communication performed by the terminal based on S-TRP and/or M-TRP. In this case, different panels in the symmetric panels are configured with the same codebook subset and/or the same full power mode.

In an example, in a case where the terminal supports the symmetric panel transmission, the first number of transmission data layers is used for both the first SRS resource set and the second SRS resource set corresponding to the panel(s) for the communication performed by the terminal based on M-TRP, and the second maximum number of transmission data layers is used for the first SRS resource set or the second SRS resource set corresponding to the panel(s) for the communication performed by the terminal based on S-TRP. Different panels in the symmetric panels supported by the terminal correspond to the same codebook subset and the same full power mode.

For example, the terminal supports the symmetric panel transmission, and the first number of transmission data layers is for the first SRS resource set and the second SRS resource set corresponding to the panel(s) for the communication performed by the terminal based on M-TRP, and the second maximum number of transmission data layers is used for the first SRS resource set or the second SRS resource set corresponding to the panel(s) for the communication performed by the terminal based on S-TRP. The first maximum number of transmission data layers corresponds to maxRank, and the second maximum number of transmission data layers corresponds to maxRank'. The maxRank is used for the first/second SRS resource set corresponding to the panel(s) for the communication performed by the terminal based on M-TRP, and the maxRank' is used for the first/second SRS resource set corresponding to the panel(s) for the communication performed by the terminal based on S-TRP. In this case, different panels in the symmetric panels are configured with the same codebook subset and/or the same full power mode.

In an example, in a case where the terminal supports the asymmetric panel transmission, the first number of transmission data layers is used for both the first SRS resource set and the second SRS resource set corresponding to the panel(s) for the communication performed by the terminal based on M-TRP, and the first number of transmission data layers is used for the first SRS resource set or the second SRS resource set corresponding to the panel(s) for the communication performed by the terminal based on S-TRP. Different panels in the symmetric panels supported by the terminal correspond to the same codebook subset and the same full power mode, or different panels in the symmetric panels supported by the terminal correspond to the same codebook subset and different full power modes, or different panels in the symmetric panels supported by the terminal correspond to different codebook subsets and different full power modes, or different panels in the symmetric panels supported by the terminal correspond to different codebook subsets and the same full power mode.

For example, when the terminal supports the asymmetric panel transmission and the first number of transmission data layers is used for both the first SRS resource set and the second SRS resource set corresponding to the panel(s) for the communication performed by the terminal based on M-TRP and/or S-TRP, the first maximum number of transmission data layers corresponds to maxRank, and maxRank is used for the first/second SRS resource set corresponding to the panel(s) for the communication performed by the terminal based on S-TRP and/or M-TRP. In this case, different panels in the symmetric panels are configured with the same/different codebook subsets and/or the same/different full power modes.

In an example, in a case where the terminal supports the asymmetric panel transmission, the first number of transmission data layers is used for both the first SRS resource set and the second SRS resource set corresponding to the panel(s) for the communication performed by the terminal based on M-TRP, and the second maximum number of transmission data layers is used for the first SRS resource set or the second SRS resource set corresponding to the panel(s) for the communication performed by the terminal based on S-TRP. Different panels in the symmetric panels supported by the terminal correspond to the same codebook subset and the same full power mode, or different panels in the symmetric panels supported by the terminal correspond to the same codebook subset and different full power modes, or different panels in the symmetric panels supported by the terminal correspond to different codebook subsets and different full power modes, or different panels in the symmetric panels supported by the terminal correspond to different codebook subsets and the same full power mode.

For example, the terminal supports the asymmetric panel transmission, and the first number of transmission data layers is used for both the first SRS resource set and the second SRS resource set corresponding to the panel(s) for the communication performed by the terminal based on M-TRP, and the second maximum number of transmission data layers is used for the first SRS resource set or the second SRS resource set corresponding to the panel(s) for the communication performed by the terminal based on S-TRP. The first maximum number of transmission data layers corresponds to maxRank, and the second maximum number of transmission data layers corresponds to maxRank'. The maxRank is used for both the first/second SRS resource set corresponding to the panel(s) for the communication performed by the terminal based on M-TRP, and the maxRank' is used for the first/second SRS resource set corresponding to the panel(s) for the communication performed by the terminal based on S-TRP. In this case, different panels in the symmetric panels are configured with the same/different codebook subsets, and/or the same/different full power modes.

In an example, in a case where the terminal supports the asymmetric panel transmission, the first number of transmission data layers is used for both the first SRS resource set and the second SRS resource set corresponding to the panel(s) for the communication performed by the terminal based on M-TRP, and a different second maximum number of transmission data layers is used for the first SRS resource set or the second SRS resource set corresponding to the panel(s) for the communication performed by the terminal based on S-TRP. Different panels in the symmetric panels supported by the terminal correspond to the same codebook subset and the same full power mode, or different panels in the symmetric panels supported by the terminal correspond to the same codebook subset and different full power modes, or different panels in the symmetric panels supported by the terminal correspond to different codebook subsets and different full power modes, or different panels in the symmetric panels supported by the terminal correspond to different codebook subsets and the same full power mode.

For example, the terminal supports the asymmetric panel transmission, and the first number of transmission data layers is used for both the first SRS resource set and the second SRS resource set corresponding to the panel(s) for the communication performed by the terminal based on M-TRP, and independently configured different second maximum numbers of transmission data layers are respectively used for the first SRS resource set or the second SRS resource set corresponding to the panel(s) for the communication performed by the terminal based on S-TRP. The first maximum number of transmission data layers corresponds to maxRank, and the second maximum number of transmission data layers corresponds to maxRank1' or maxRank2'. The maxRank is used for both the first/second SRS resource set corresponding to the panel(s) for the communication performed by the terminal based on M-TRP, and the maxRank1'/maxRank2' is used for the first/second SRS resource set corresponding to the panel(s) for the communication performed by the terminal based on S-TRP. In this case, different panels in the symmetric panels are configured with the same/different codebook subsets, and/or the same/different full power modes.

In an example, in a case where the terminal supports the asymmetric panel transmission, different first maximum numbers of transmission data layers are respectively used for the first SRS resource set and the second SRS resource set corresponding to the panel(s) for the communication performed by the terminal based on M-TRP, and the second maximum number of transmission data layers is used for the first SRS resource set or the second SRS resource set corresponding to the panel(s) for the communication performed by the terminal based on S-TRP. Different panels in the symmetric panels supported by the terminal correspond to the same codebook subset and the same full power mode, or different panels in the symmetric panels supported by the terminal correspond to the same codebook subset and different full power modes, or different panels in the symmetric panels supported by the terminal correspond to different codebook subsets and different full power modes, or different panels in the symmetric panels supported by the terminal correspond to different codebook subsets and the same full power mode.

For example, the terminal supports the asymmetric panel transmission, and independently configured different first numbers of transmission data layers are respectively used for the first SRS resource set and the second SRS resource set corresponding to the panel(s) for the communication performed by the terminal based on M-TRP, and the second maximum number of transmission data layers from the capability reporting is used simultaneously for the first SRS resource set or the second SRS resource set corresponding to the panel(s) for the communication performed by the terminal based on S-TRP. The first maximum number of transmission data layers corresponds to maxRank1 or maxRank2, respectively, and the second maximum number of transmission data layers corresponds to maxRank'. The maxRank1 and maxRank2 are respectively used for the first/second SRS resource set corresponding to the panel(s) for the communication performed by the terminal based on M-TRP, and maxRank' is simultaneously used for the first/second SRS resource set corresponding to the panel(s) for the communication performed by the terminal based on S-TRP. In this case, different panels in the symmetric panels are configured with the same/different codebook subsets, and/or the same/different full power modes.

In an example, in a case where the terminal supports the asymmetric panel transmission, different first maximum numbers of transmission data layers are respectively used for the first SRS resource set and the second SRS resource set corresponding to the panel(s) for the communication performed by the terminal based on M-TRP, and a different second maximum number of transmission data layers is used for the first SRS resource set or the second SRS resource set corresponding to the panel(s) for the communication performed by the terminal based on S-TRP. Different panels in the symmetric panels supported by the terminal correspond to the same codebook subset and the same full power mode, or different panels in the symmetric panels supported by the terminal correspond to the same codebook subset and different full power modes, or different panels in the symmetric panels supported by the terminal correspond to different codebook subsets and different full power modes, or different panels in the symmetric panels supported by the terminal correspond to different codebook subsets and the same full power mode.

For example, the terminal supports the asymmetric panel transmission, and independently configured different first numbers of transmission data layers are respectively used for the first SRS resource set and the second SRS resource set corresponding to the panel(s) for the communication performed by the terminal based on M-TRP, and a different second maximum number of transmission data layers from the capability reporting is respectively used for the first SRS resource set or the second SRS resource set corresponding to the panel(s) for the communication performed by the terminal based on S-TRP. The first maximum number of transmission data layers corresponds to maxRank1 or maxRank2, and the second maximum number of transmission data layers correspond to maxRank1' or maxRank2'. The maxRank1 and maxRank2 are respectively used for the first/second SRS resource set corresponding to the panel(s) for the communication performed by the terminal based on M-TRP, and maxRank1' and maxRank2' are respectively used for the first/second SRS resource set corresponding to the panel(s) for the communication performed by the terminal based on S-TRP. In this case, different panels in the symmetric panels are configured with the same/different codebook subsets, and/or the same/different full power modes.

In a Physical Uplink Shared Channel (PUSCH) communication method provided by an embodiment of the present disclosure, the SRS resource set configuration parameter includes at least one of: the number of SRS resources in an SRS resource set and the number of ports of each SRS resource in the SRS resource set.

The SRS resource set configuration parameter may include any one of: the number of SRS resources in an RS resource set and the number of ports of each SRS resource in the SRS resource set, or may include the number of SRS resources in an RS resource set and the number of ports of each SRS resource in the SRS resource set.

In an embodiment of the present disclosure, in response to the terminal adopting the codebook transmission, the numbers of SRS resources for different SRS resource sets for different panels in the symmetric panels and/or asymmetric panels supported by the terminal are the same, and the numbers of ports for the SRS resources are the same. And/or, in response to the terminal adopting the non-codebook transmission, the numbers of SRS resources for different SRS resource sets for different panels in the symmetric panels and/or asymmetric panels supported by the terminal are the same.

In response to the terminal adopting the codebook transmission, the network device includes the numbers of SRS resources and the numbers of ports for the SRS resources in the SRS resource set configuration parameters corresponding to different SRS resource sets for different panels in the asymmetric panels supported by the terminal, and the numbers of SRS resources are the same and the number of ports for the SRS resources are also the same.

In an example, in response to the terminal adopting the codebook transmission, for a case of asymmetric panels with 2 antennas + 4 antennas, the number of ports for SRS resources for the two panels can only be configured at the same time according to the panel with a lower panel capability. That is, the number of ports of an SRS resource corresponding to the panel with 4 antennas is configured according to the number of ports of an SRS resource for the panel with 2 antennas, and the numbers of ports are the same, both of which are 2.

In response to the terminal adopting the codebook transmission, the network device includes the numbers of SRS resources and the numbers of ports for SRS resources in the SRS resource set configuration parameters corresponding to different SRS resource sets for different panels in the symmetric panels supported by the terminal, and the numbers of SRS resources are the same and the numbers of ports for SRS resources are also the same.

In a Physical Uplink Shared Channel (PUSCH) communication method provided by an embodiment of the present disclosure, the terminal adopts the codebook transmission, and the number of ports for SRS resources in different SRS resource sets for different panels in the symmetric panels supported by the terminal is the first maximum number of transmission data layers.

In an example, in response to the terminal adopting the codebook transmission, the numbers of SRS resources for different SRS resource sets for different panels in the symmetric panels supported by the terminal are the same, and the numbers of ports for SRS resources are also the same. When the first maximum number of transmission data layers is configured for both the first SRS resource set and the second SRS resource set corresponding to the panel(s) for the communication performed by the terminal based on M-TRP and for the first SRS resource set or the second SRS resource set corresponding to the panel(s) for the communication performed by the terminal based on S-TRP, the number of ports of an SRS resource is configured as the first maximum number of transmission data layers in this case.

For example, in response to the terminal adopting the codebook transmission, the terminal supports the symmetric panel transmission, and when the first number of transmission data layers is configured for both the first SRS resource set and the second SRS resource set corresponding to the panel(s) for the communication performed by the terminal based on M-TRP and/or S-TRP, the first maximum number of transmission data layers corresponds to maxRank, and the number of ports of an SRS resource is configured as maxRank.

In a Physical Uplink Shared Channel (PUSCH) communication method provided by an embodiment of the present disclosure, the terminal adopts the codebook transmission, and the number of ports for SRS resources for different SRS resource sets for different panels in the symmetric panels supported by the terminal is the first maximum number of transmission data layers and/or the second maximum number of transmission layers.

In an example, in response to the terminal adopting the codebook transmission, the numbers of SRS resources for different SRS resource sets for different panels in the symmetric panels supported by the terminal are the same, and the numbers of ports for SRS resources are also the same. When the first maximum number of transmission data layers is configured for both the first SRS resource set and the second SRS resource set corresponding to the panel(s) for the communication performed by the terminal based on M-TRP, and the second maximum number of transmission data layers is configured for the first SRS resource set or the second SRS resource set corresponding to the panel(s) for the communication performed by the terminal based on S-TRP, the number of ports of an SRS resource is configured as the first maximum number of transmission data layers and/or the second maximum number of transmission data layers in this case. For example, the number of ports for all SRS resources in different SRS resource sets may be configured as the first maximum number of transmission data layers. Alternatively, the number of ports for all SRS resources in different SRS resource sets may be configured as the second maximum number of transmission data layers. Alternatively, different SRS resource sets include both the number of ports for SRS resources configured as the first maximum number of transmission data layers and the number of ports for SRS resources configured as the second maximum number of transmission data layers.

For example, in response to the terminal adopting the codebook transmission, the terminal supports the symmetric panel transmission, and the first number of transmission data layers is configured for both the first SRS resource set and the second SRS resource set corresponding to the panel(s) for the communication performed by the terminal based on M-TRP, and the second maximum number of transmission data layers is configured for the first SRS resource set or the second SRS resource set corresponding to the panel(s) for the communication performed by the terminal based on S-TRP. The first maximum number of transmission data layers corresponds to maxRank, and the second maximum number of transmission data layers corresponds to maxRank'. In this case, the number of ports for an SRS resource is configured as maxRank and/or maxRank'.

Different SRS resource sets include both the number of ports for an SRS resource which is configured as the first maximum number of transmission data layers and the number of ports for an SRS resource which is configured as the second maximum number of transmission data layers. For example, in a case of symmetrical panels of 4 antennas + 4 antennas, if the first maximum number of transmission data layers is 2 and the second maximum number of transmission data layers is 4, an SRS resource set includes one or more SRS resources with a port number of 4 and one or more SRS resources with a port number of 2. In this case, in actual applications, the terminal autonomously selects corresponding SRS resource(s) for transmission according to the M-TRP transmission or the S-TRP transmission.

In a Physical Uplink Shared Channel (PUSCH) communication method provided by an embodiment of the present disclosure, the terminal adopts the codebook transmission, the full power mode of the terminal is configured as a full power mode 2, and the maximum number of SRS resources in an SRS resource set for different panels in the symmetrical panels supported by the terminal is 4.

In response to the full power mode of the terminal not being configured as the full power mode 2, the network device configures the maximum number of SRS resources in an SRS resource set for different panels in the symmetric panels supported by the terminal as 2. Alternatively, in response to the full power mode of the terminal not being configured as the full power mode 2, the network device configures the maximum number of SRS resources for different SRS resource sets for different panels in the symmetric panels supported by the terminal as the first maximum number of transmission data layers or the second maximum number of transmission layers.

In an example, in response to the terminal adopting the codebook transmission, when the first maximum number of transmission data layers is configured for both the first SRS resource set and the second SRS resource set corresponding to the panel(s) for the communication performed by the terminal based on M-TRP and for the first SRS resource set or the second SRS resource set corresponding to the panel(s) for communication performed by the terminal based on S-TRP, if the full power mode of the terminal is configured as the full power mode 2, the SRS resource sets for different panels in the symmetrical panels supported by the terminal have a maximum number of SRS resources of 4. If the full power mode of the terminal is not configured as the full power mode 2, the SRS resource sets for different panels in the symmetrical panels supported by the terminal has a maximum number of SRS resources of 2.

In an example, in response to the terminal adopting the codebook transmission, when the first maximum number of transmission data layers is configured for both the first SRS resource set and the second SRS resource set corresponding to panel(s) for the communication performed by the terminal based on M-TRP, and the second maximum number of transmission data layers is configured for the first SRS resource set or the second SRS resource set corresponding to the panel(s) for the communication performed by the terminal based on S-TRP, if the full power mode of the terminal is configured as the full power mode 2, the SRS resource sets for different panels in the symmetrical panels supported by the terminal have a maximum number of SRS resources of 4. If the full power mode of the terminal is not configured as the full power mode 2, the maximum number of SRS resources for different SRS resource sets for different panels in the symmetrical panels supported by the terminal may be the first maximum number of transmission data layers, or may be the second maximum number of transmission layers, and the first maximum number of transmission data layers or the second maximum number of transmission layers may be greater than 2.

In response to the terminal adopting the non-codebook transmission, the network device includes the number of SRS resources in the SRS resource set configuration parameters corresponding to different SRS resource sets for different panels in the symmetric panels supported by the terminal, and the number of SRS resources is the same.

In a Physical Uplink Shared Channel (PUSCH) communication method provided by an embodiment of the present disclosure, the terminal adopts the non-codebook transmission, and the number of SRS resources for different SRS resource sets for different panels in the symmetric panels supported by the terminal is the first maximum number of transmission data layers.

In an example, in response to the terminal adopting the non-codebook transmission, the number of SRS resources for different SRS resource sets for different panels in the symmetric panels supported by the terminal is the same. When the first maximum number of transmission data layers is configured for both the first SRS resource set and the second SRS resource set corresponding to the panel(s) for the communication performed by the terminal based on M-TRP, and is configured for the first SRS resource set or the second SRS resource set corresponding to the panel(s) for the communication performed by the terminal based on S-TRP, the number of SRS resources is configured as the first maximum number of transmission data layers in this case.

For example, in response to the terminal adopting the non-codebook transmission, the terminal supports the symmetric panel transmission, and the first number of transmission data layers is configured for both the first SRS resource set and the second SRS resource set corresponding to the panel(s) for the communication performed by the terminal based on M-TRP and/or S-TRP, the first maximum number of transmission data layers corresponds to maxRank, and the number of ports of an SRS resource is configured as maxRank in this case.

In a Physical Uplink Shared Channel (PUSCH) communication method provided by an embodiment of the present disclosure, the terminal adopts the non-codebook transmission, and the number of SRS resources for different SRS resource sets for different panels in the symmetric panels supported by the terminal is the first maximum number of transmission data layers or the second maximum number of transmission layers.

In an example, in response to the terminal adopting the non-codebook transmission, the numbers of SRS resources for different SRS resource sets for different panels in the symmetric panels supported by the terminal are the same. When the first maximum number of transmission data layers is configured for both the first SRS resource set and the second SRS resource set corresponding to the panel(s) for the communication performed by the terminal based on M-TRP, and the second maximum number of transmission data layers is configured for the first SRS resource set or the second SRS resource set corresponding to the panel(s) for the communication performed by the terminal based on S-TRP, the number of SRS resources is configured as the first maximum number of transmission data layers and/or the second maximum number of transmission data layers in this case. For example, all the numbers of SRS resources for different SRS resource sets may be configured as the first maximum number of transmission data layers. Alternatively, all the number of SRS resources for different SRS resource sets may be configured as the second maximum number of transmission data layers.

For example, in response to the terminal adopting the non-codebook transmission, the terminal supports the symmetric panel transmission, and the first number of transmission data layers is configured for both the first SRS resource set and the second SRS resource set corresponding to the panel(s) for the communication performed by the terminal based on M-TRP, and the second maximum number of transmission data layers is configured for the first SRS resource set or the second SRS resource set corresponding to the panel(s) for the communication performed by the terminal based on S-TRP. The first maximum number of transmission data layers corresponds to maxRank, and the second maximum number of transmission data layers corresponds to maxRank'. In this case, the number of ports of an SRS resource is configured as maxRank and/or maxRank'.

In response to the terminal adopting the codebook transmission, the network device includes the number of SRS resources and the number of ports of an SRS resource in the SRS resource set configuration parameters corresponding to different SRS resource sets for different panels in the asymmetric panels supported by the terminal.

In a Physical Uplink Shared Channel (PUSCH) communication method provided by an embodiment of the present disclosure, the terminal adopts the codebook transmission, different panels in the asymmetric panels supported by the terminal adopt different full power configuration modes, different SRS resource sets corresponding to different full power configuration modes have different numbers of SRS resources, and different numbers of ports for SRS resources.

In an example, when the first maximum number of transmission data layers is configured for both the first SRS resource set and the second SRS resource set corresponding to the panel(s) for the communication performed by the terminal based on M-TRP, and the second maximum number of transmission data layers is configured for the first SRS resource set or the second SRS resource set corresponding to the panel(s) for the communication performed by the terminal based on S-TRP, if different panels in the asymmetric panels supported by the terminal use different full power configuration modes in this case, the numbers of SRS resources for the SRS resource sets corresponding to different panels are different, and the numbers of ports for SRS resources are different.

For example, in response to the terminal adopting the codebook transmission, the terminal supports the asymmetric panel transmission, and the first number of transmission data layers is configured for both the first SRS resource set and the second SRS resource set corresponding to the panel(s) for the communication performed by the terminal based on M-TRP, and the second maximum number of transmission data layers is configured for the first SRS resource set or the second SRS resource set corresponding to the panel(s) for the communication performed by the terminal based on S-TRP. The first maximum number of transmission data layers corresponds to maxRank, and the second maximum number of transmission data layers corresponds to maxRank'. In this case, considering that different panels in the asymmetric panels supported by the terminal adopt different full power configuration modes, the numbers of SRS resources for the SRS resource sets corresponding to different panels are different, and the numbers of ports for SRS resources are different.

In a Physical Uplink Shared Channel (PUSCH) communication method provided by an embodiment of the present disclosure, the terminal adopts the codebook transmission, and different SRS resource sets for different panels in the asymmetric panel supported by the terminal have the same number of SRS resources, and different numbers of ports for SRS resources. And/or, in response to the terminal adopting the non-codebook transmission, different SRS resource sets for different panels in the asymmetric panels supported by the terminal have the same number of SRS resources.

In an example, when different first maximum numbers of transmission data layers are configured respectively for the first SRS resource set and the second SRS resource set corresponding to the panel(s) for the communication performed by the terminal based on M-TRP, and the second maximum number of transmission data layers obtained from capability reporting is used for the first SRS resource set or the second SRS resource set corresponding to the panel(s) for the communication performed by the terminal based on S-TRP, in response to the terminal adopting the codebook transmission, the network device configures the same numbers of SRS resources for different SRS resource sets for different panels in the asymmetric panels supported by the terminal and different numbers of ports for SRS resources in this case. Alternatively, in response to the terminal adopting the non-codebook transmission, the network device configures the same numbers of SRS resources for different SRS resource sets for different panels in the asymmetric panels supported by the terminal in this case. Alternatively, in response to the terminal adopting the codebook transmission, the network device configures the same numbers of SRS resources for different SRS resource sets for different panels in the asymmetric panels supported by the terminal and different numbers of ports for SRS resources in this case. And, also in response to the terminal adopting the non-codebook transmission, the network device configures the same numbers of SRS resources for different SRS resource sets for different panels in the asymmetric panels supported by the terminal in this case.

For example, the terminal supports the asymmetric panel transmission, and independently configured different first numbers of transmission data layers are respectively used for the first SRS resource set and the second SRS resource set corresponding to the panel(s) for the communication performed by the terminal based on M-TRP, and the second maximum number of transmission data layers from the capability reporting is simultaneously used for the first SRS resource set or the second SRS resource set corresponding to the panel(s) for the communication performed by the terminal based on S-TRP. The first maximum numbers of transmission data layer corresponds to maxRank1 or maxRank2 respectively, and the second maximum number of transmission data layers corresponds to maxRank'. The maxRank1 and maxRank2 are respectively used for the first/second SRS resource set corresponding to the panel(s) for the communication performed by the terminal based on M-TRP, and the maxRank' is simultaneously used for the first/second SRS resource set corresponding to the panel(s) for the communication performed by the terminal based on S-TRP. In response to the terminal adopting the codebook transmission, the numbers of SRS resources for different SRS resource sets for different panels in the asymmetric panels supported by the terminal are the same, and the numbers of ports for SRS resources are different. And/or, in response to the terminal adopting the non-codebook transmission, the numbers of SRS resources for different SRS resource sets for different panels in the asymmetric panels supported by the terminal are the same.

In a Physical Uplink Shared Channel (PUSCH) communication method provided by an embodiment of the present disclosure, the terminal adopts the codebook transmission, and different SRS resource sets for different panels in the asymmetric panels supported by the terminal have different numbers of SRS resources, and different numbers of ports for SRS resources. And/or, in response to the terminal adopting the non-codebook transmission, different SRS resource sets for different panels in the asymmetric panels supported by the terminal have different numbers of SRS resources.

In an example, when different first maximum numbers of transmission data layers are configured respectively for the first SRS resource set and the second SRS resource set corresponding to the panel(s) for the communication performed by the terminal based on M-TRP, and different second maximum numbers of transmission data layers obtained from capability reporting are respectively used for the first SRS resource set or the second SRS resource set corresponding to the panel(s) for the communication performed by the terminal based on S-TRP, in response to the terminal adopting the codebook transmission, the network device configures different numbers of SRS resources for different SRS resource sets for different panels in the asymmetric panels supported by the terminal and different numbers of ports for SRS resources in this case. Alternatively, in response to the terminal adopting the non-codebook transmission, the network device configures different numbers of SRS resources for different SRS resource sets for different panels in the asymmetric panels supported by the terminal in this case. Alternatively, in response to the terminal adopting the codebook transmission, the network device configures different numbers of SRS resources for different SRS resource sets for different panels in the asymmetric panels supported by the terminal and different numbers of ports for SRS resources in this case, and also in response to the terminal adopting the non-codebook transmission, the network device configures different numbers of SRS resources for different SRS resource sets for different panels in the asymmetric panels supported by the terminal in this case.

For example, the terminal supports the asymmetric panel transmission, and independently configured different first numbers of transmission data layers are respectively used for the first SRS resource set and the second SRS resource set corresponding to the panel(s) for the communication performed by the terminal based on M-TRP, and different second maximum numbers of transmission data layers obtained from capability reporting are respectively used for the first SRS resource set or the second SRS resource set corresponding to the panel(s) for the communication performed by the terminal based on S-TRP, the first maximum number of transmission data layers corresponds to maxRank1 or maxRank2, and the second maximum number of transmission data layers corresponds to maxRank1' or maxRank2'. The maxRank1 and maxRank2 are respectively used for the first/second SRS resource set corresponding to the panel(s) for the communication performed by the terminal based on M-TRP, and the maxRank1' and maxRank2' are respectively used for the first/second SRS resource set corresponding to the panel(s) for the communication performed by the terminal based on S-TRP. In response to the terminal adopting the codebook transmission, the numbers of SRS resources for different SRS resource sets for different panels in the asymmetric panels supported by the terminal are different, and the numbers of ports for SRS resources are different in this case. Alternatively, in response to the terminal adopting the non-codebook transmission, the network device configures different numbers of SRS resources for different SRS resource sets for different panels in the asymmetric panels supported by the terminal in this case. Alternatively, in response to the terminal adopting the codebook transmission, the network device configures different numbers of SRS resources for different SRS resource sets for different panels in the asymmetric panels supported by the terminal and different numbers of ports for SRS resources in this case, and also in response to the terminal adopting the non-codebook transmission, the network device configures different numbers of SRS resources for different SRS resource sets for different panels in the asymmetric panels supported by the terminal in this case.

In a Physical Uplink Shared Channel (PUSCH) communication method provided by an embodiment of the present disclosure, the number of SRS resources and/or the number of ports of an SRS resource for different SRS resource sets for different panels in the asymmetric panels supported by the terminal are determined based on the first maximum number of transmission data layers or the second maximum number of transmission layers.

In an example, in response to the terminal adopting the codebook transmission, the network device determines the number of SRS resources and/or the number of ports for SRS resources for different SRS resource sets for different panels in the asymmetric panels supported by the terminal based on the first maximum number of transmission data layers or the second maximum number of transmission layers.

In an example, in response to the terminal adopting the non-codebook transmission, the network device determines the number of SRS resources for different SRS resource sets for different panels in the asymmetric panels supported by the terminal based on the first maximum number of transmission data layers or the second maximum number of transmission layers.

In all the Physical Uplink Shared Channel (PUSCH) communication methods involved in the present disclosure, the S-DCI or M-DCI scheduling based PUSCH transmission mode using the STxMP transmission supported by the terminal is an SDM transmission mode.

That is, the above-mentioned Physical Uplink Shared Channel (PUSCH) communication methods are all applicable to a case where the PUSCH transmission mode using the STxMP transmission scheduled by S-DCI or M-DCI is the SDM transmission mode.

In a part of Physical Uplink Shared Channel (PUSCH) communication methods involved in the present disclosure, the S-DCI or M-DCI scheduling based PUSCH transmission mode using the STxMP transmission supported by the terminal is an SFN transmission mode.

That is, the above-mentioned Physical Uplink Shared Channel (PUSCH) communication methods are partially applicable to a case where the PUSCH transmission mode using the STxMP transmission scheduled by S-DCI or M-DCI is the SFN transmission mode.

In the embodiments of the present disclosure, when the terminal supports the uplink STxMP transmission, based on different transmission situations of the network device and the terminal, the PUSCH transmission resource configuration parameter is configured. The maximum number of transmission layers, the codebook parameter and the SRS resource set for the terminal in the PUSCH transmission are configured separately. Thus, on the basis of ensuring the flexibility of the terminal, the embodiments of the present disclosure can enable the PUSCH transmission to support a higher transmission rate and throughput.

It can be understood that the technical implementations involved in the procedure of the network device performing the Physical Uplink Shared Channel (PUSCH) communication method in the embodiments of the present disclosure may be applicable to the procedure of the terminal performing the Physical Uplink Shared Channel (PUSCH) communication method in the embodiments of the present disclosure. Therefore, for some technical implementations of the procedure of the network device performing the Physical Uplink Shared Channel (PUSCH) communication method that are not detailed enough, reference may be made to the relevant descriptions of the implementation procedure of the terminal performing the Physical Uplink Shared Channel (PUSCH) communication methods, and repeated descriptions will be omitted here.

It can be understood that the Physical Uplink Shared Channel (PUSCH) communication method provided in the embodiments of the present disclosure are applicable to the procedure of implementing the Physical Uplink Shared Channel (PUSCH) communication methods through an interaction procedure between the terminal and the network device. The procedure of implementing the Physical Uplink Shared Channel (PUSCH) communication method through interaction(s) between the terminal and the network device will not be detailed in the embodiments of the present disclosure.

It should be noted that those skilled in the art can understand that various implementations/embodiments involved in the embodiments of the present disclosure can be used in conjunction with the aforementioned embodiments or can be used independently. The implementation principle is similar regardless of whether used alone or in conjunction with the aforementioned embodiments. In the implementations of the present disclosure, a part of embodiments are described using combination(s) of implementations. Of course, those skilled in the art can understand that such examples are not limitations of the embodiments of the present disclosure.

Based on the same concept, an embodiment of the present disclosure further provides a Physical Uplink Shared Channel (PUSCH) communication apparatus.

It can be understood that in order to realize the above functions, the Physical Uplink Shared Channel (PUSCH) communication apparatus provided by the embodiment of the present disclosure includes hardware structure(s) and/or software module(s) corresponding to the execution of each function. In combination with the units and algorithm steps of each example disclosed in the embodiments of the present disclosure, the embodiments of the present disclosure can be implemented in the form of hardware or a combination of hardware and computer software. Whether a function is executed in the form of hardware or computer software driving hardware depends on the specific application and design constraints of the technical solutions. Those skilled in the art can use different methods to implement the described functions for each specific application, but such implementation should not be considered to beyond the scope of the technical solutions of the embodiments of the present disclosure.

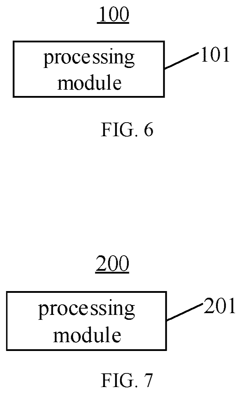

FIG. 6 is a block diagram of a Physical Uplink Shared Channel (PUSCH) communication apparatus 100 according to an example embodiment. Referring to FIG. 6, the apparatus includes a processing module 101.

The processing module 101 is configured to, in response to determining that a terminal supports uplink simultaneous transmission via multiple antenna panels STxMP transmission, configure a PUSCH transmission resource configuration parameter; the PUSCH transmission resource configuration parameter corresponds to the terminal supporting a symmetric panel transmission and/or an asymmetric panel transmission, and the PUSCH transmission resource configuration parameter includes at least one of: a maximum number of transmission data layers, a codebook parameter, and a Sounding Reference Signal (SRS) resource set configuration parameter, and the Sounding Reference Signal (SRS) resource set configuration parameter is applied to a codebook based transmission and/or a non-codebook based transmission.

In an implementation, the maximum number of transmission data layers includes a first maximum number of transmission data layers; the first maximum number of transmission data layers is a maximum number of transmission data layers supported by a corresponding panel for a communication performed by the terminal based on Multiple-Transmission Reception Point (M-TRP), and is a maximum number of transmission data layers supported by a corresponding panel for a communication performed by the terminal based on a Single-Transmission Reception Point (S-TRP).

In an implementation, SRS resource sets for different panels in symmetric panels and/or asymmetric panels supported by the terminal correspond to a same first maximum number of transmission data layers.

In an implementation, different SRS resource sets for different panels in asymmetric panels supported by the terminal correspond to different first maximum numbers of transmission data layers.

In an implementation, the maximum number of transmission data layers further includes a second maximum number of transmission data layers; the second maximum number of transmission data layers is a maximum number of transmission data layers supported by the corresponding panel for the communication performed by the terminal based on the S-TRP.

In an implementation, different SRS resource sets for different panels in the symmetric panels and/or asymmetric panels supported by the terminal correspond to different second maximum numbers of transmission data layers.

In an implementation, SRS resource sets for different panels in the asymmetric panels supported by the terminal correspond to different second maximum numbers of transmission data layers.

In an implementation, the codebook parameter includes at least one of: a codebook subset, and a full power mode; different panels in symmetrical panels supported by the terminal correspond to a same codebook subset and/or a same full power mode; different panels in asymmetric panels supported by the terminal correspond to a same codebook subset and/or a same full power mode; or different panels in the asymmetric panels supported by the terminal correspond to different codebook subsets and/or different full power modes.

In an implementation, the SRS resource set configuration parameter includes at least one of: the number of SRS resources in an SRS resource set and the number of ports of each SRS resource in the SRS resource set.

In an implementation, in response to the terminal adopting the codebook transmission, different SRS resource sets for different panels in symmetric panels and/or asymmetric panels supported by the terminal have a same number of SRS resources, and a same number of ports for the SRS resources; and/or in response to the terminal adopting the non-codebook transmission, different SRS resource sets for different panels in the symmetric panels and/or asymmetric panels supported by the terminal have a same number of SRS resources.

In an implementation, the terminal adopts the codebook transmission, and the number of ports for SRS resources for different SRS resource sets for different panels in the symmetric panels supported by the terminal is a first maximum number of transmission data layers.

In an implementation, the terminal adopts the codebook transmission, and the number of ports for SRS resources for different SRS resource sets for different panels in the symmetric panels supported by the terminal is a first maximum number of transmission data layers and/or a second maximum number of transmission layers.

In an implementation, the terminal adopts the codebook transmission, a full power mode of the terminal is configured as a full power mode 2, and the SRS resource sets for different panels in the symmetric panels supported by the terminal have a maximum number of SRS resources of 4; in response to the full power mode of the terminal not being configured as the full power mode 2, the SRS resource sets for different panels in the symmetric panels supported by the terminal have a maximum number of SRS resources of 2; or, in response to the full power mode of the terminal not being configured as the full power mode 2, the maximum number of SRS resources for different SRS resource sets for different panels in the symmetric panels supported by the terminal is the first maximum number of transmission data layers or a second maximum number of transmission layers.

In an implementation, the terminal adopts the non-codebook transmission, and the number of SRS resources for different SRS resource sets for different panels in the symmetric panels supported by the terminal is a first maximum number of transmission data layers.

In an implementation, the terminal adopts the non-codebook transmission, and the number of SRS resources for different SRS resource sets for different panels in the symmetric panels supported by the terminal is a first maximum number of transmission data layers or a second maximum number of transmission layers.

In an implementation, the terminal adopts the codebook transmission, different panels in asymmetric panels supported by the terminal adopt different full power configuration modes, different SRS resource sets corresponding to different full power configuration modes have different numbers of SRS resources, and different numbers of ports for the SRS resources.

In an implementation, the terminal adopts the codebook transmission, different SRS resource sets for different panels in asymmetric panels supported by the terminal have a same number of SRS resources, and different numbers of ports for the SRS resources; and/or in response to the terminal adopting the non-codebook transmission, different SRS resource sets for different panels in the asymmetric panels supported by the terminal have a same number of SRS resources.

In an implementation, the terminal adopts the codebook transmission, different SRS resource sets for different panels in asymmetric panels supported by the terminal have different numbers of SRS resources, and different numbers of ports for the SRS resources; and/or in response to the terminal adopting non-codebook transmission, different SRS resource sets for different panels in the asymmetric panels supported by the terminal have different numbers of SRS resources.

In an implementation, the numbers of SRS resources and/or the numbers of ports for SRS resources for different SRS resource sets for different panels in the asymmetric panels supported by the terminal are determined based on a first maximum number of transmission data layers or a second maximum number of transmission layers.

In an implementation, the terminal supports a Space Division Multiplexing (SDM) transmission mode of Single-Downlink Control Information (S-DCI) or Multi-Downlink Control Information (M-DCI) scheduling based PUSCH transmission mode using the STxMP transmission.

In an implementation, the terminal supports a Single Frequency Network (SFN) transmission mode of Single-Downlink Control Information (S-DCI) or Multi-Downlink Control Information (M-DCI) scheduling based PUSCH transmission mode using the STxMP transmission.

FIG. 7 is a block diagram of a Physical Uplink Shared Channel (PUSCH) communication apparatus 200 according to an example embodiment. Referring to FIG. 7, the apparatus includes a processing module 201.

The processing module 201 is configured to determine that the terminal supports uplink simultaneous transmission via multiple antenna panels STxMP transmission and a PUSCH transmission resource configuration parameter is configured; the PUSCH transmission resource configuration parameter corresponds to the terminal supporting a symmetric panel transmission and/or an asymmetric panel transmission, and the PUSCH transmission resource configuration parameter includes at least one of: a maximum number of transmission data layers, a codebook parameter, and a Sounding Reference Signal (SRS) resource set configuration parameter, and the Sounding Reference Signal (SRS) resource set configuration parameter is applied to a codebook based transmission and/or a non-codebook based transmission.

In an implementation, the maximum number of transmission data layers includes a first maximum number of transmission data layers; the first maximum number of transmission data layers is a maximum number of transmission data layers supported by a corresponding panel for a communication performed by the terminal based on Multiple-Transmission Reception Point (M-TRP), and is a maximum number of transmission data layers supported by a corresponding panel for a communication performed by the terminal based on a Single-Transmission Reception Point (S-TRP).

In an implementation, SRS resource sets for different panels in symmetric panels and/or asymmetric panels supported by the terminal correspond to a same first maximum number of transmission data layers.

In an implementation, different SRS resource sets for different panels in asymmetric panels supported by the terminal correspond to different first maximum numbers of transmission data layers.

In an implementation, the maximum number of transmission data layers further includes a second maximum number of transmission data layers; the second maximum number of transmission data layers is a maximum number of transmission data layers supported by the corresponding panel for the communication performed by the terminal based on the S-TRP.

In an implementation, different SRS resource sets for different panels in the symmetric panels and/or asymmetric panels supported by the terminal correspond to different second maximum numbers of transmission data layers.

In an implementation, SRS resource sets for different panels in the asymmetric panels supported by the terminal correspond to different second maximum numbers of transmission data layers.

In an implementation, the codebook parameter includes at least one of: a codebook subset, and a full power mode; different panels in symmetrical panels supported by the terminal correspond to a same codebook subset and/or a same full power mode; different panels in asymmetric panels supported by the terminal correspond to a same codebook subset and/or a same full power mode; or different panels in the asymmetric panels supported by the terminal correspond to different codebook subsets and/or different full power modes.

In an implementation, the SRS resource set configuration parameter includes at least one of: the number of SRS resources in an SRS resource set and the number of ports of each SRS resource in the SRS resource set.

In an implementation, in response to the terminal adopting the codebook transmission, different SRS resource sets for different panels in symmetric panels and/or asymmetric panels supported by the terminal have a same number of SRS resources, and a same number of ports for the SRS resources; and/or in response to the terminal adopting the non-codebook transmission, different SRS resource sets for different panels in the symmetric panels and/or asymmetric panels supported by the terminal have a same number of SRS resources.

In an implementation, the terminal adopts the codebook transmission, and the number of ports for SRS resources for different SRS resource sets for different panels in the symmetric panels supported by the terminal is a first maximum number of transmission data layers.

In an implementation, the terminal adopts the codebook transmission, and the number of ports for SRS resources for different SRS resource sets for different panels in the symmetric panels supported by the terminal is a first maximum number of transmission data layers and/or a second maximum number of transmission layers.

In an implementation, the terminal adopts the codebook transmission, a full power mode of the terminal is configured as a full power mode 2, and the SRS resource sets for different panels in the symmetric panels supported by the terminal have a maximum number of SRS resources of 4; in response to the full power mode of the terminal not being configured as the full power mode 2, the SRS resource sets for different panels in the symmetric panels supported by the terminal have a maximum number of SRS resources of 2; or, in response to the full power mode of the terminal not being configured as the full power mode 2, the maximum number of SRS resources for different SRS resource sets for different panels in the symmetric panels supported by the terminal is the first maximum number of transmission data layers or a second maximum number of transmission layers.

In an implementation, the terminal adopts the non-codebook transmission, and the number of SRS resources for different SRS resource sets for different panels in the symmetric panels supported by the terminal is a first maximum number of transmission data layers.

In an implementation, the terminal adopts the non-codebook transmission, and the number of SRS resources for different SRS resource sets for different panels in the symmetric panels supported by the terminal is a first maximum number of transmission data layers or a second maximum number of transmission layers.

In an implementation, the terminal adopts the codebook transmission, different panels in asymmetric panels supported by the terminal adopt different full power configuration modes, different SRS resource sets corresponding to different full power configuration modes have different numbers of SRS resources, and different numbers of ports for the SRS resources.

In an implementation, the terminal adopts the codebook transmission, different SRS resource sets for different panels in asymmetric panels supported by the terminal have a same number of SRS resources, and different numbers of ports for the SRS resources; and/or in response to the terminal adopting the non-codebook transmission, different SRS resource sets for different panels in the asymmetric panels supported by the terminal have a same number of SRS resources.

In an implementation, the terminal adopts the codebook transmission, different SRS resource sets for different panels in asymmetric panels supported by the terminal have different numbers of SRS resources, and different numbers of ports for the SRS resources; and/or in response to the terminal adopting the non-codebook transmission, different SRS resource sets for different panels in the asymmetric panels supported by the terminal have different numbers of SRS resources.

In an implementation, the numbers of SRS resources and/or the numbers of ports for SRS resources for different SRS resource sets for different panels in the asymmetric panels supported by the terminal are determined based on a first maximum number of transmission data layers or a second maximum number of transmission layers.

In an implementation, the terminal supports a Space Division Multiplexing (SDM) transmission mode of Single-Downlink Control Information (S-DCI) or Multi-Downlink Control Information (M-DCI) scheduling based PUSCH transmission mode using the STxMP transmission.

In an implementation, the terminal supports a Single Frequency Network (SFN) transmission mode of Single-Downlink Control Information (S-DCI) or Multi-Downlink Control Information (M-DCI) scheduling based PUSCH transmission mode using the STxMP transmission.

Regarding the apparatuses in the above embodiments, the specific manner in which each module performs operations has been described in detail in the embodiments of the methods, and will not be elaborated here.

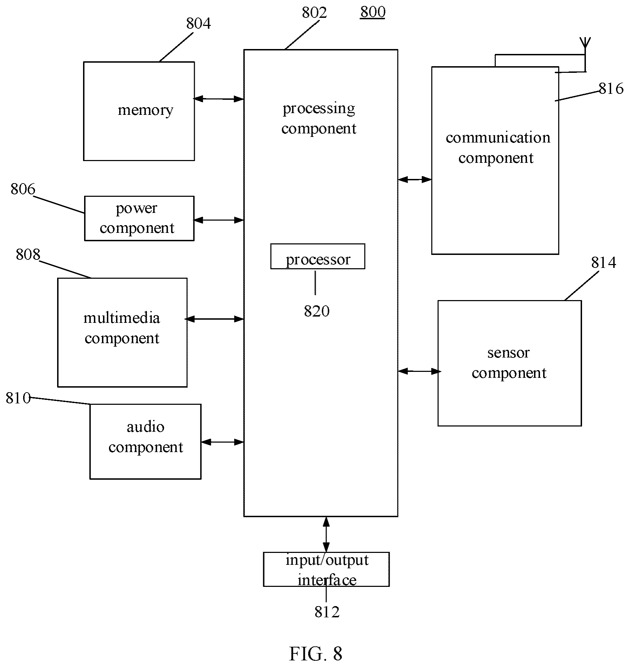

FIG. 8 is a block diagram of an apparatus 800 for a Physical Uplink Shared Channel (PUSCH) communication according to an example embodiment. For example, the apparatus 800 may be a mobile phone, a computer, a digital broadcast terminal, a messaging device, a gaming console, a tablet, a medical device, exercise equipment, a personal digital assistant, and the like.

Referring to FIG. 8, the apparatus 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the apparatus 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the apparatus 800. Examples of such data include instructions for any applications or methods operated on the apparatus 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the apparatus 800. The power component 806 may include a power management system, one or more power sources, and any other components associated with the generation, management, and distribution of power in the apparatus 800.

The multimedia component 808 includes a screen providing an output interface between the apparatus 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the apparatus 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the apparatus 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the apparatus 800. For instance, the sensor component 814 may detect an open/closed status of the apparatus 800, relative positioning of components, e.g., the display and the keypad, of the apparatus 800, a change in position of the apparatus 800 or a component of the apparatus 800, a presence or absence of user contact with the apparatus 800, an orientation or an acceleration/deceleration of the apparatus 800, and a change in temperature of the apparatus 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the apparatus 800 and other devices. The apparatus 800 can access a wireless network based on a communication standard, such as WiFi, 2G, or 3G, or a combination thereof. In one example embodiment, the communication component 816 receives a broadcast signal or broadcast associated information from an external broadcast management system via a broadcast channel. In one example embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the apparatus 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In example embodiments, there is also provided a non-transitory computer-readable storage medium including instructions, such as the memory 804 including instructions executable by the processor 820 in the apparatus 800, for performing the above-described methods. For example, the non-transitory computer-readable storage medium may be a ROM, a Random Access Memory (RAM), a CD-ROM, a magnetic tape, a floppy disc, an optical data storage device, and the like.

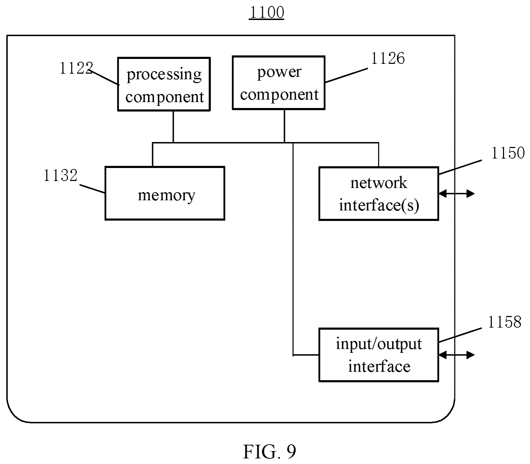

FIG. 9 is a block diagram of an apparatus 1100 for a Physical Uplink Shared Channel (PUSCH) communication according to an example embodiment. For example, the apparatus 1100 may be provided as a server. Referring to FIG. 9, the apparatus 1100 includes a processing component 1122 that further includes one or more processors, and memory resources represented by a memory 1132 for storing instructions executable by the processing component 1122, such as application programs. The application programs stored in the memory 1132 may include one or more modules each corresponding to a set of instructions. Further, the processing component 1122 is configured to execute the instructions to perform the above methods.

The apparatus 1100 may also include a power component 1126 configured to perform power management of the apparatus 1100, wired or wireless network interface(s) 1150 configured to connect the apparatus 1100 to a network, and an input/output (I/O) interface 1158. The apparatus 1100 may operate based on an operating system stored in the memory 1132, such as Windows Server™, Mac OS X™, Unix™, Linux™, FreeBSD™, or the like.

It can be further understood that "plurality" in the present disclosure refers to two or more than two, and other quantifiers are similar. The expression "and/or" describes an association relationship of associated objects, indicating that three relationships may exist. For example, A and/or B may represent: A exists alone, A and B exist at the same time, and B exists alone. The character "/" generally indicates that associated objects before and after the character are in an "or" relationship. The singular forms "a/an", "said" and "the" are also intended to include plural forms, unless the context clearly indicates other meanings.

It can be further understood that the meanings of the words "in response to" and "if" involved in the present disclosure depend on the context and the actual usage scenarios. For example, the word "in response to" used herein may be interpreted as "at the time of..." or "when..." or "if".

It can be further understood that the terms "first", "second", etc. are used to describe various information, but such information should not be limited to these terms. These terms are only used to distinguish the same type of information from each other, and do not indicate a specific order or degree of importance. In fact, the expressions "first", "second", etc. can be used interchangeably. For example, without departing from the scope of the present disclosure, first information may also be referred to as second information, and similarly, second information may also be referred to as first information.

It can be further understood that although operations are described in a specific order in the drawings in the embodiments of the present disclosure, it should not be understood as requiring the operations to be performed in the specific order shown in the drawings or in a serial order, or requiring the execution of all the operations shown in the drawings to obtain a desired result. In certain environments, multitasking and parallel processing may be advantageous.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the scope of the appended claims.

**Claims**

1. A Physical Uplink Shared Channel (PUSCH) communication method, wherein the method is performed by a network device, and the method comprises:

    in response to determining that a terminal supports uplink simultaneous transmission via multiple antenna panels STxMP transmission, configuring a PUSCH transmission resource configuration parameter;
    wherein the PUSCH transmission resource configuration parameter corresponds to the terminal supporting a symmetric panel transmission and/or an asymmetric panel transmission, and the PUSCH transmission resource configuration parameter comprises at least one of: a maximum number of transmission data layers, a codebook parameter, and a Sounding Reference Signal (SRS) resource set configuration parameter applied to a codebook based transmission and/or a non-codebook based transmission.

2. The method according to claim 1, wherein the maximum number of transmission data layers comprises a first maximum number of transmission data layers;
    wherein the first maximum number of transmission data layers is a maximum number of transmission data layers supported by a corresponding panel for a communication performed by the terminal based on Multiple-Transmission Reception Point (M-TRP), and is a maximum number of transmission data layers supported by a corresponding panel for a communication performed by the terminal based on a Single-Transmission Reception Point (S-TRP).

3. The method according to claim 2, wherein SRS resource sets for different panels in symmetric panels and/or asymmetric panels supported by the terminal correspond to a same first maximum number of transmission data layers.

4. The method according to claim 2, wherein different SRS resource sets for different panels in asymmetric panels supported by the terminal correspond to different first maximum numbers of transmission data layers.

5. The method according to any one of claims 2 to 4, wherein the maximum number of transmission data layers further comprises a second maximum number of transmission data layers;

   wherein the second maximum number of transmission data layers is a maximum number of transmission data layers supported by the corresponding panel for the communication performed by the terminal based on the S-TRP.

6. The method according to claim 3 or 5, wherein different SRS resource sets for different panels in the symmetric panels and/or asymmetric panels supported by the terminal correspond to different second maximum numbers of transmission data layers.

7. The method according to claim 4 or 5, wherein SRS resource sets for different panels in the asymmetric panels supported by the terminal correspond to different second maximum numbers of transmission data layers.

8. The method according to any one of claims 1 to 7, wherein the codebook parameter comprises at least one of: a codebook subset, and a full power mode;

   wherein different panels in symmetrical panels supported by the terminal correspond to a same codebook subset and/or a same full power mode;
   wherein different panels in asymmetric panels supported by the terminal correspond to a same codebook subset and/or a same full power mode; or
   wherein different panels in the asymmetric panels supported by the terminal correspond to different codebook subsets and/or different full power modes.

9. The method according to any one of claims 1 to 8, wherein the SRS resource set configuration parameter comprises at least one of: the number of SRS resources in an SRS resource set and the number of ports of each SRS resource in the SRS resource set.

10. The method according to claim 9, wherein:

    in response to the terminal adopting the codebook transmission, different SRS resource sets for different panels in symmetric panels and/or asymmetric panels supported by the terminal have a same number of SRS resources, and a same number of ports for the SRS resources; and/or
    in response to the terminal adopting the non-codebook transmission, different SRS resource sets for different panels in the symmetric panels and/or asymmetric panels supported by the terminal have a same number of SRS resources.

11. The method according to claim 10, wherein the terminal adopts the codebook transmission, and the number of ports for the SRS resources for different SRS resource sets for different panels in the symmetric panels supported by the terminal is a first maximum number of transmission data layers.

12. The method according to claim 10, wherein the terminal adopts the codebook transmission, and the number of ports for the SRS resources for different SRS resource sets for different panels in the symmetric panels supported by the terminal is a first maximum number of transmission data layers and/or a second maximum number of transmission data layers.

13. The method according to any one of claims 11 to 12, wherein the terminal adopts the codebook transmission, a full power mode of the terminal is configured as a full power mode 2, and the SRS resource sets for different panels in the symmetric panels supported by the terminal have a maximum number of SRS resources of 4;

    wherein in response to the full power mode of the terminal not being configured as the full power mode 2, the SRS resource sets for different panels in the symmetric panels supported by the terminal have a maximum number of SRS resources of 2; or

wherein in response to the full power mode of the terminal not being configured as the full power mode 2, the maximum number of SRS resources for different SRS resource sets for different panels in the symmetric panels supported by the terminal is the first maximum number of transmission data layers or a second maximum number of transmission layers.

14. The method according to claim 10, wherein the terminal adopts the non-codebook transmission, and the number of SRS resources for different SRS resource sets for different panels in the symmetric panels supported by the terminal is a first maximum number of transmission data layers.

15. The method according to claim 10, wherein the terminal adopts the non-codebook transmission, and the number of SRS resources for different SRS resource sets for different panels in the symmetric panels supported by the terminal is a first maximum number of transmission data layers or a second maximum number of transmission layers.

16. The method according to claim 9, wherein the terminal adopts the codebook transmission, different panels in asymmetric panels supported by the terminal adopt different full power configuration modes, different SRS resource sets corresponding to different full power configuration modes have different numbers of SRS resources, and different numbers of ports for the SRS resources.

17. The method according to claim 9, wherein the terminal adopts the codebook transmission, different SRS resource sets for different panels in asymmetric panels supported by the terminal have a same number of SRS resources, and different numbers of ports for the SRS resources; and/or
wherein in response to the terminal adopting the non-codebook transmission, different SRS resource sets for different panels in the asymmetric panels supported by the terminal have a same number of SRS resources.

18. The method according to claim 9, wherein the terminal adopts the codebook transmission, different SRS resource sets for different panels in asymmetric panels supported by the terminal have different numbers of SRS resources, and different numbers of ports for the SRS resources; and/or
wherein in response to the terminal adopting non-codebook transmission, different SRS resource sets for different panels in the asymmetric panels supported by the terminal have different numbers of SRS resources.

19. The method according to claim 10 or any one of claims 16 to 18, wherein the numbers of SRS resources and/or the numbers of ports for SRS resources for different SRS resource sets for different panels in the asymmetric panels supported by the terminal are determined based on a first maximum number of transmission data layers or a second maximum number of transmission layers.

20. The method according to any one of claims 1 to 19, wherein the terminal supports a Space Division Multiplexing (SDM) transmission mode of Single-Downlink Control Information (S-DCI) or Multi-Downlink Control Information (M-DCI) scheduling based PUSCH transmission mode using the STxMP transmission.

21. The method according to any one of claims 1 to 3, or 5, or 6, or any one of claims 8 to 19, wherein the terminal supports a Single Frequency Network (SFN) transmission mode of Single-Downlink Control Information (S-DCI) or Multi-Downlink Control Information (M-DCI) scheduling based PUSCH transmission mode using the STxMP transmission.

22. A Physical Uplink Shared Channel (PUSCH) communication method, wherein the method is performed by a terminal, and the method comprises:

determining that the terminal supports uplink simultaneous transmission via multiple antenna panels STxMP transmission and a PUSCH transmission resource configuration parameter is configured;
wherein the PUSCH transmission resource configuration parameter corresponds to the terminal supporting a symmetric panel transmission and/or an asymmetric panel transmission, and the PUSCH transmission resource configuration parameter comprises at least one of: a maximum number of transmission data layers, a codebook parameter, and a Sounding Reference Signal (SRS) resource set configuration parameter applied to a codebook based transmission and/or a non-codebook based transmission.

23. The method according to claim 22, wherein the maximum number of transmission data layers comprises a first maximum number of transmission data layers;
wherein the first maximum number of transmission data layers is a maximum number of transmission data layers supported by a corresponding panel for a communication performed by the terminal based on Multiple-Transmission Reception Point (M-TRP), and is a maximum number of transmission data layers supported by a corresponding panel for a communication performed by the terminal based on a Single-Transmission Reception Point (S-TRP).

24. The method according to claim 23, wherein SRS resource sets for different panels in symmetric panels and/or asymmetric panels supported by the terminal correspond to a same first maximum number of transmission data layers.

25. The method according to claim 23, wherein different SRS resource sets for different panels in asymmetric panels supported by the terminal correspond to different first maximum numbers of transmission data layers.

26. The method according to any one of claims 23 to 25, wherein the maximum number of transmission data layers further comprises a second maximum number of transmission data layers;
    wherein the second maximum number of transmission data layers is a maximum number of transmission data layers supported by the corresponding panel for the communication performed by the terminal based on the S-TRP.

27. The method according to claim 24 or 26, wherein different SRS resource sets for different panels in the symmetric panels and/or asymmetric panels supported by the terminal correspond to different second maximum numbers of transmission data layers.

28. The method according to claim 25 or 26, wherein SRS resource sets for different panels in the asymmetric panels supported by the terminal correspond to different second maximum numbers of transmission data layers.

29. The method according to any one of claims 22 to 28, wherein the codebook parameter comprises at least one of: a codebook subset, and a full power mode;

    wherein different panels in symmetrical panels supported by the terminal correspond to a same codebook subset and/or a same full power mode;
    wherein different panels in asymmetric panels supported by the terminal correspond to a same codebook subset and/or a same full power mode; or
    wherein different panels in the asymmetric panels supported by the terminal correspond to different codebook subsets and/or different full power modes.

30. The method according to any one of claims 22 to 29, wherein the SRS resource set configuration parameter comprises at least one of: the number of SRS resources in an SRS resource set and the number of ports of each SRS resource in the SRS resource set.

31. The method according to claim 30, wherein:

    in response to the terminal adopting the codebook transmission, different SRS resource sets for different panels in symmetric panels and/or asymmetric panels supported by the terminal have a same number of SRS resources, and a same number of ports for the SRS resources; and/or
    in response to the terminal adopting the non-codebook transmission, different SRS resource sets for different panels in the symmetric panels and/or asymmetric panels supported by the terminal have a same number of SRS resources.

32. The method according to claim 31, wherein the terminal adopts the codebook transmission, and the number of ports for the SRS resources for different SRS resource sets for different panels in the symmetric panels supported by the terminal is a first maximum number of transmission data layers.

33. The method according to claim 31, wherein the terminal adopts the codebook transmission, and the number of ports for the SRS resources for different SRS resource sets for different panels in the symmetric panels supported by the terminal is a first maximum number of transmission data layers and/or a second maximum number of transmission layers.

34. The method according to any one of claims 32 to 33, wherein the terminal adopts the codebook transmission, a full power mode of the terminal is configured as a full power mode 2, and the SRS resource sets for different panels in the symmetric panels supported by the terminal have a maximum number of SRS resources of 4;

wherein in response to the full power mode of the terminal not being configured as the full power mode 2, the SRS resource sets for different panels in the symmetric panels supported by the terminal have a maximum number of SRS resources of 2; or

wherein in response to the full power mode of the terminal not being configured as the full power mode 2, the maximum number of SRS resources for different SRS resource sets for different panels in the symmetric panels supported by the terminal is the first maximum number of transmission data layers or a second maximum number of transmission layers.

35. The method according to claim 31, wherein the terminal adopts the non-codebook transmission, and the number of SRS resources for different SRS resource sets for different panels in the symmetric panels supported by the terminal is a first maximum number of transmission data layers.

36. The method according to claim 31, wherein the terminal adopts the non-codebook transmission, and the number of SRS resources for different SRS resource sets for different panels in the symmetric panels supported by the terminal is a first maximum number of transmission data layers or a second maximum number of transmission layers.

37. The method according to claim 30, wherein the terminal adopts the codebook transmission, different panels in asymmetric panels supported by the terminal adopt different full power configuration modes, different SRS resource sets corresponding to different full power configuration modes have different numbers of SRS resources, and different numbers of ports for the SRS resources.

38. The method according to claim 30, wherein the terminal adopts the codebook transmission, different SRS resource sets for different panels in asymmetric panels supported by the terminal have a same number of SRS resources, and different numbers of ports for the SRS resources; and/or

wherein in response to the terminal adopting the non-codebook transmission, different SRS resource sets for different panels in the asymmetric panels supported by the terminal have a same number of SRS resources.

39. The method according to claim 30, wherein the terminal adopts the codebook transmission, different SRS resource sets for different panels in asymmetric panels supported by the terminal have different numbers of SRS resources, and different numbers of ports for the SRS resources; and/or

wherein in response to the terminal adopting the non-codebook transmission, different SRS resource sets for different panels in the asymmetric panels supported by the terminal have different numbers of SRS resources.

40. The method according to claim 31 or any one of claims 16 to 18, wherein the numbers of SRS resources and/or the numbers of ports for the SRS resources for different SRS resource sets for different panels in the asymmetric panels supported by the terminal are determined based on a first maximum number of transmission data layers or a second maximum number of transmission layers.

41. The method according to any one of claims 22 to 40, wherein the terminal supports a Space Division Multiplexing (SDM) transmission mode of Single-Downlink Control Information (S-DCI) or Multi-Downlink Control Information (M-DCI) scheduling based PUSCH transmission mode using the STxMP transmission.

42. The method according to any one of claims 22 to 24, or 26, or 27, or any one of claims 29 to 40, wherein the terminal supports a Single Frequency Network (SFN) transmission mode of Single-Downlink Control Information (S-DCI) or Multi-Downlink Control Information (M-DCI) scheduling based PUSCH transmission mode using the STxMP transmission.

43. A Physical Uplink Shared Channel (PUSCH) communication apparatus, wherein the apparatus is configured in a network device, and the apparatus comprises:

a processing module configured to, in response to determining that a terminal supports uplink simultaneous transmission via multiple antenna panels STxMP transmission, configure a PUSCH transmission resource configuration parameter;

wherein the PUSCH transmission resource configuration parameter corresponds to the terminal supporting a symmetric panel transmission and/or an asymmetric panel transmission, and the PUSCH transmission resource configuration parameter comprises at least one of: a maximum number of transmission data layers, a codebook parameter, and a Sounding Reference Signal (SRS) resource set configuration parameter applied to a codebook based transmission and/or a non-codebook based transmission.

44. A Physical Uplink Shared Channel (PUSCH) communication apparatus, wherein the apparatus is configured in a terminal, and the apparatus comprises:

a processing module configured to determine that the terminal supports uplink simultaneous transmission via multiple antenna panels STxMP transmission and a PUSCH transmission resource configuration parameter is configured;

wherein the PUSCH transmission resource configuration parameter corresponds to the terminal supporting a symmetric panel transmission and/or an asymmetric panel transmission, and the PUSCH transmission resource configuration parameter comprises at least one of: a maximum number of transmission data layers, a codebook parameter, and a Sounding Reference Signal (SRS) resource set configuration parameter applied to a codebook based transmission and/or a non-codebook based transmission.

45. A Physical Uplink Shared Channel (PUSCH) communication apparatus, wherein the apparatus is configured in a network device, and the apparatus comprises:

a processor; and
a memory configured to store instructions executable by the processor;
wherein the processor is configured to perform the method according to any one of claims 1 to 21.

46. A Physical Uplink Shared Channel (PUSCH) communication apparatus, wherein the apparatus is configured in a terminal, and the apparatus comprises:

a processor; and
a memory configured to store instructions executable by the processor;
wherein the processor is configured to perform the method according to any one of claims 22 to 42.

47. A storage medium, wherein the storage medium stores instructions, and when the instructions in storage medium are executed by a processor of a terminal, the terminal is enabled to perform the method according to any one of claims 1 to 21.

48. A storage medium, wherein the storage medium stores instructions, and when the instructions in the storage medium are executed by a processor of a network device, the network device is enabled to perform the method according to any one of claims 22 to 42.

terminal

network device

FIG. 1

FIG. 2

FIG. 3

| In response to determining that a terminal supports uplink simultaneous transmission via multiple antenna panels STxMP transmission, configure a PUSCH transmission resource configuration parameter |
|---|

~ S11

FIG. 4

| Determine that the terminal supports uplink simultaneous transmission via multiple antenna panels STxMP transmission and a PUSCH transmission resource configuration parameter is configured |
|---|

~ S21

FIG. 5

<u>100</u>

| processing module |
|---|

—101

FIG. 6

<u>200</u>

| processing module |
|---|

—201

FIG. 7

FIG. 8

FIG. 9

## INTERNATIONAL SEARCH REPORT

| International application No. |
| --- |
| **PCT/CN2023/076965** |

### A. CLASSIFICATION OF SUBJECT MATTER

H04L 5/00(2006.01)i

According to International Patent Classification (IPC) or to both national classification and IPC

### B. FIELDS SEARCHED

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

CNTXT, ENTXTC, WPABSC, DWPI, 3GPP: 多, 面板, 天线板, 平面, 同时, 并发, 并行, 传输, 物理上行共享信道, 层, 数, 最大, 码本, 非码本, 子集, 满功率, 全功率, 探测参考信号, 对称, 非对称, multi, panel, simultaneous, parallel, transmission, STxMP, PUSCH, layer, number, max, codebook, CB, non-codebook, NCB, subset, full power, SRS, symmetric, asymmetric

### C. DOCUMENTS CONSIDERED TO BE RELEVANT

| Category* | Citation of document, with indication, where appropriate, of the relevant passages | Relevant to claim No. |
| --- | --- | --- |
| X | MODERATOR (OPPO). "Summary #3 on Rel-18 STxMP"<br>*3GPP TSG RAN WG1 #111, R1-2212581*, 18 November 2022 (2022-11-18),<br>sections 2-4 | 1-48 |
| X | MEDIATEK INC. "Simultaneous transmission across multiple UE panels"<br>*3GPP TSG RAN WG1 #111, R1-2212238*, 18 November 2022 (2022-11-18),<br>section 2 | 1-48 |
| X | QUALCOMM INC. "Simultaneous multi-panel transmission"<br>*3GPP TSG RAN WG1 #111, R1-2212104*, 18 November 2022 (2022-11-18),<br>sections 2-3 | 1-48 |
| A | CN 114586307 A (FRAUNHOFER-GESELLSCHAFT ZUR FÖRDERUNG DER<br>ANGEWANDTEN FORSCHUNG E.V.) 03 June 2022 (2022-06-03)<br>entire document | 1-48 |
| A | US 2022272674 A1 (LG ELECTRONICS INC.) 25 August 2022 (2022-08-25)<br>entire document | 1-48 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **15 September 2023** | **21 September 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/076965**

| Patent document cited in search report | | | Publication date (day/month/year) | Patent family member(s) | | | Publication date (day/month/year) |
|---|---|---|---|---|---|---|---|
| CN | 114586307 | A | 03 June 2022 | JP | 2022520818 | A | 01 April 2022 |
| | | | | US | 2022123799 | A1 | 21 April 2022 |
| | | | | EP | 4221058 | A1 | 02 August 2023 |
| | | | | EP | 3697014 | A1 | 19 August 2020 |
| | | | | ES | 2946347 | T3 | 17 July 2023 |
| | | | | US | 2023092635 | A1 | 23 March 2023 |
| | | | | WO | 2020165413 | A1 | 20 August 2020 |
| | | | | KR | 20210124476 | A | 14 October 2021 |
| | | | | EP | 3925136 | A1 | 22 December 2021 |
| US | 2022272674 | A1 | 25 August 2022 | WO | 2021020847 | A1 | 04 February 2021 |

Form PCT/ISA/210 (patent family annex) (July 2022)